Europäisches Patentamt

European Patent Office

Office européen des brevets

(11) Veröffentlichungsnummer: **0 352 782 B1**

(12) **EUROPÄISCHE PATENTSCHRIFT**

(45) Veröffentlichungstag der Patentschrift: **02.02.94**

(21) Anmeldenummer: **89113838.0**

(22) Anmeldetag: **27.07.89**

(51) Int. Cl.⁵: **F02D 41/24**, F02D 41/14

(54) **Verfahren zur adaptiven Steuerung einer Betriebsgrösse einer Antriebskomponente eines Kraftfahrzeuges.**

(30) Priorität: **29.07.88 DE 3825749**

(43) Veröffentlichungstag der Anmeldung:
**31.01.90 Patentblatt 90/05**

(45) Bekanntmachung des Hinweises auf die
Patenterteilung:
**02.02.94 Patentblatt 94/05**

(84) Benannte Vertragsstaaten:
**FR IT**

(56) Entgegenhaltungen:
**DE-A- 3 436 190        DE-A- 3 603 137
DE-C- 3 049 980        DE-C- 3 424 532
GB-A- 2 162 967        GB-A- 2 186 997**

**PATENT ABSTRACTS OF JAPAN vol. 9, no.
152 (M-391) 27. Juni 1985 & JP-A-60 027 782
(TOYOTA JIDOSHA K.K.) 12. Februar 1985**

(73) Patentinhaber: **Daimler-Benz Aktiengesellschaft
Postfach 600202
Mercedesstrasse 136
D-70327 Stuttgart(DE)**

(72) Erfinder: **Jürgens, Gunter
Werderstrasse 1
D-7000 Stuttgart 1(DE)**
Erfinder: **Sürig, Udo
Im Himmelsberg 12
D-7000 Stuttgart 1(DE)**
Erfinder: **Lang, Lothar
Potsdamer Strasse 49
D-7300 Esslingen(DE)**

**Beschreibung**

Die Erfindung bezieht sich auf ein verfahren nach dem Oberbegriff von Patentanspruch 1.

Bei einem bekannten Verfahren dieser Art (DE-OS 34 36 190) zur adaptiven Steuerung eines selbsttätig schaltenden Gangwechselgetriebes als Antriebskomponente eines Kraftfahrzeuges werden als kritische Zeitspanne die Schaltzeit einer mit einer Änderung der Getriebeübersetzung verbundenen und von daher als instationärer Betriebszustand anzusehenden Gangumschaltung für den Sollwert-Istwert-Vergleich herangezogen. Der Arbeits- bzw. Schaltdruck, welcher zur Beaufschlagung der die an der Umschaltung beteiligten Reibelemente (Kupplungen, Bremsen) betätigenden Schaltstellglieder verwendet und infolgedessen für die Dauer der Schaltzeit mit als maßgebend anzusehen ist, wird durch die Korrekturwerte nach Maßgabe der Abweichungen beeinflußt. Bei diesem bekannten Verfahren wird der Istwert durch Mittelwertbildung der Meßwerte aus einer Mehrzahl von Umschaltungen erhalten. Da Umschaltungen ohnehin selten in denselben Betriebspunkten auftreten, ist der Zeitraum bis zur endgültigen Anpassung des Kennfeldes für die Korrekturwerte relativ groß.

Dieser Nachteil ist aus den gleichen Gründen auch einem weiteren bekannten gattungsgemäßen Verfahren (DE-PS 34 24 532) zur Steuerung einer Antriebsmaschine mit geregeltem Abgaskatalysator noch eigen, bei welchem zur Optimierung des Kraftstoff-Luft-Verhältnisses im instationären Zustand jeweils eine λ-Sonde vor und hinter dem Abgaskatalysator verwendet ist und mittels der vor dem Abgaskatalysator angeordneten λ-Sonde das Vorliegen eines nicht gewünschten Kraftstoff-Luftverhältnisses erkannt und das Verhältnis entsprechend korrigiert wird. Bei diesem bekannten Verfahren werden wiederum nur für bestimmte, vorgegebene Motor-Betriebszustände im instationären Bereich die Korrekturwerte für die λ-Regelung sowie die Zeitspanne, nach der die hinter dem Abgaskatalysator liegende λ-Sonde wieder ein korrektes Kraftstoff-Luft-Verhältnis anzeigt, gespeichert. Nur bei erneutem Vorliegen des gleichen Motor-Betriebszustandes wird auf die gespeicherten Korrekturwerte zurückgegriffen, wobei letztere in Richtung des korrekten λ-Wertes variiert werden. Die nunmehr erhaltene Zeitspanne wird mit der gespeicherten Zeitspanne verglichen - wobei eine Zeitverkürzung zur Speicherung der neuen Korrekturwerte und der neuen Zeitspanne führt. Durch Wiederholung dieser Voränge - aber nur bei erneutem Vorliegen des gleichen Motor-Betriebszustandes - werden die Korrekturwerte iterativ soweit korrigiert, bis die Zeitspanne ein Minimum erreicht. Auch hier ist also der Zeitraum bis zum Erreichen des minimalen Wertes der kritischen Zeitspanne relativ groß.

Bei einem bekannten gattungsfremden Verfahren zur Steuerung einer Brennkraftmaschine (DE-PS 30 49 980) ohne adaptive Korrektureingriffe ist zur Vermeidung anomaler Verbrennung, sogenannten Klopfens, ein spezieller Meßgrößenumformer verwendet, welcher einen von der Verbrennung abhängigen Parameter, beispielsweise die in der Brennkraftmaschine herrschenden Druck- und/oder Temperaturbedingungen, zu erfassen und ein einem solchen Parameterwert entsprechendes Ausgangssignal zu erzeugen vermag, um auf wenigstens eine die Verbrennung in der Brennkraftmaschine regelnde Vorrichtung einzuwirken. Bei diesem Verfahren wird das Ausgangssignal des Meßgrößenumformers mit einem Bezugssignal verglichen, das einen der Motordrehzahl proportionalen Signalwert hat und den Parameterwert bei optimaler Verbrennung in der Brennkraftmaschine darstellt. Nach Maßgabe der Abweichung wird ein Abweichungssignal erzeugt, das den Ansaugdruck der Brennkraftmaschine so beeinflußt, daß der Ansaugdruck verringert wird, wenn der vom Meßgrößenumformer erfaßte Parameterwert Bedingungen mit anomal hohem Druck und/oder anomal hoher Temperatur während der Verbrennung in der Brennkraftmaschine darstellt.

Aus der GB-A 2 186 997 ist ein Einstell-Regelsystem für einen Verbrennungsmotor bekannt, das mit einer ersten Einrichtung zum Bestimmen der Motordrehzahl, einer zweiten Einrichtung zum Bestimmen der Lastbeanspruchung, der der Motor unterworfen ist, mit einer dritten Einrichtung zum Bestimmen eines Basiswertes oder einer Mehrzahl von Basiswerten eines ersten Motorregelparameters nach einem festen Schema, mit einem Korrektionsschema, in dem Korrektionswerte für den ersten Regelparameter als ein zwei-dimensionales Feld als Funktion der Motordrehzahl und der Lastbeanspruchung gespeichert sind, mit einer vierten Einrichtung zum Erzeugen eines aus den Korrektionswerten des Korrektionsschemas berechneten korrigierten Wertes für die augenblickliche Motordrehzahl und Lastbeanspruchung, und mit einer fünften Einrichtung zum Bestimmen eines Befehlswertes für den ersten Regelparameter durch Aufsummieren eines entsprechenden Basiswertes und entsprechenden berechneten korrigierten Wertes, arbeitet.

Bei diesem bekannten Regelsystem wird angestrebt, daß der Vorzündwinkel an die jeweils aktuellen Erfordernisse der unterschiedlichen Betriebsparameter des Verbrennungsmotors laufend anpaßbar ist.

Dies soll bei dem bekannten Regelsystem dadurch erreicht werden, daß eine Aktualisierungseinrichtung zum Aktualisieren der in dem Korrektionsschema gespeicherten Werte vorgesehen ist, die eine Mehrzahl von Abweichungswerten erzeugt, jeden Abweichungswert mit jedem der die augenblickliche Motordrehzahl und Lastbeanspruchung umgebenden vier Feldpunkte entsprechenden Wichtungsfaktoren zum Bilden von vier Produkten multipliziert und die vier Produkte zum Aktualisieren der an den vier Feldpunkten gespeicherten Korrektionswerte benutzt, daß die vierte Einrichtung jeden der Korrektionswerte, die in dem Korrektionsschema an den die augenblickliche Motordrehzahl und Lastbeanspruchung umgebenden vier Feldpunkten in der Geschwindigkeits-/Lastbeanspruchungsebene gespeichert sind, mit einem entsprechenden Wichtungsfaktor zum Erzeugen von Produkten multipliziert und dann die vier Produkte zum Erzeugen eines berechneten korrigierten Wertes summiert, und daß die Wichtungsfaktoren durch Bilden eines Hauptrechtekkes, dessen Ecken an den vier die augenblickliche Drehzahl und Lastbeanspruchung umgebenden Feldpunkten liegen, Unterteilen des Hauptrechteckes in vier Unterrechtekke durch die Ordinate und Abszisse, die durch den Punkt der augenblicklichen Drehzahl und Lastbeanspruchung gehen, und Berechnen des Wichtungsfaktors für jeden Feldpunkt in Abhängigkeit von der Fläche des diagonal gegenüberliegenden Unterrechteckes bestimmt werden.

Die der Erfindung zugrunde liegende Aufgabe besteht im wesentlichen darin, ein Verfahren zur adaptiven Steuerung einer Betriebsgrösse einer Antriebskomponente eines Kraftfahrzeuges so zu verbessern, daß eine schnellere endgültige Anpassung des Kennfeldes für die Korrekturwerte erreicht ist, d. h. mit anderen Worten, die jeweilige Änderung der Korrekturwerte soll bereits nach einer kleinen Anzahl von instationären Betriebszuständen zu Null werden.

Ausgehend von einem Verfahren der eingangs genannten Art ist die erläuterte Aufgabe gemäß der Erfindung in vorteilhafter Weise mit den kennzeichnenden Merkmalen von Patentanspruch 1 gelöst.

Bei dem Verfahren nach der Erfindung erfolgt ggfls. nach jedem instationären Betriebszustand - unabhängig davon, ob dieser in einem ausgewählten oder in einem nicht ausgewählten Betriebspunkt auftrat - eine Korrektur des Kennfeldes, so daß der vorerwähnte Zeitraum auf ein geringes Maß, nämlich auf das Auftreten von relativ wenigen instationären Betriebszuständen, verkürzt ist.

Bei dem Verfahren nach der Erfindung wird sowohl durch die Einschreibung eines neuen Korrekturwertes als auch durch die Einschreibung eines neuen übertragenden Korrekturwertes jeweils an der Stelle eines ausgewählten Betriebspunktes der Brennkraftmaschine eine Art örtlicher Gumminetz-Effekt bei der Anpassung des Kennfeldes erreicht, weil der jeweils neue Korrekturwert auch für die im benachbarten Umfeld des zugehörigen ausgewählten Betriebspunktes auftretenden instationären Betriebszustände die Basis zur Ermittlung von Sollwert und Korrekturwert bildet. Dies wirkt sich besonders bei der erfindungsgemäßen Verringerung der für die endgültige Anpassung des Kennfeldes für die Korrekturwerte erforderlichen Anzahl instationärer Betriebszustände aus.

Das Verfahren nach der Erfindung ist in vorteilhafter Weise jeweils individuell an eine oder mehrere Phasen des jeweiligen instationären Betriebszustandes anpassbar, in denen in unterschiedlichem Maße Schwankungen von Betriebsparametern auftreten, welche sich auf die Zeitspanne auswirken können.

Durch die Maßnahme nach Patentanspruch 2 ist insbesondere noch die Genauigkeit hinsichtlich der Korrekturwertbildung bei dem Verfahren nach der Erfindung erhöht.

Bei dem Verfahren nach der Erfindung ist in vorteilhafter Weise eine Dämpfung bei dem Adaptionsschritt des jeweils nachfolgenden instationären Betriebszustandes insbesondere durch die Maßnahme nach Patentanspruch 3 erreichbar.

Es wird eine vorteilhafte Anordnung zur Durchführung des Verfahrens nach der Erfindung gemäss Patentanspruch 4 vorgeschlagen.

Bei der vorgeschlagenen Anordnung zur Durchführung des Verfahrens nach der Erfindung ist der Fall berücksichtigt, daß der Soll-Wert-Istwert-Vergleich unzulässige Abweichungen nicht ergibt - mithin eine Korrektur des betreffenden Kennfeldes nicht vorzunehmen ist.

Bei der vorgeschlagenen Anordnung zur Durchführung des Verfahrens nach der Erfindung ist zur Steuerung für einen in einem nicht ausgewählten Betriebspunkt auftretenden instationären Betriebszustand für den Fall, daß der Sollwert-Istwert-Vergleich über ein zulässiges Maß hinausgehende Abweichungen ergibt, vorgesehen, daß das betreffende Kennfeld zu korrigieren ist.

Bei der vorgeschlagenen Anordnung zur Durchführung des Verfahrens nach der Erfindung zur Steuerung für einen in einem ausgewählten Betriebspunkt auftretenden instationären Betriebszustand sind ggfls. auch Korrekturen des betreffenden Kennfeldes ermöglicht.

Die vorgeschlagene Anordnung zur Durchführung des Verfahrens nach der Erfindung bei welcher in einer Ausführungsform der technische Aufwand vor allem hinsichtlich der elektronischen Speicherkapazitäten durch die Maßnahmen nach einem der Patentansprüche 5 bis 8 besonders gering gehalten sein kann, ist im Rahmen der Patentansprüche 4 bis 8 universell einsetzbar, d. h. unabhängig davon, um welche Antriebskomponente des Kraftfahrzeuges es sich handelt.

Bei der vorgeschlagenen Anordnung zur Durchführung des Verfahrens nach der Erfindung hat sich eine Ausgestaltung nach einem der Patentansprüche 9 bis 14 als vorteilhaft ergeben, wenn es sich um die Steuerung des Gangwechselgetriebes als Antriebskomponente des Kraftfahrzeuges handelt.

So ist durch die Maßnahme nach Patentanspruch 10 bei der vorgeschlagenen Anordnung zur Durchführung des Verfahrens nach der Erfindung einerseits die Änderung der Fahrgeschwindigkeit bei einer den instationären Betriebszustand hinsichtlich der Getriebeübersetzung ergebenden Umschaltung berücksichtigt als auch für letztere ein genauer Betriebspunkt im Teillastbereich bestimmbar, was durch eine Messung der Motordrehzahl bei einem dem Gangwechselgetriebe im Kraftfluß vorgeschalteten hydrodynamischen Anfahrwandler nicht ohne weiteres möglich ist.

Dagegen ist es durch die Maßnahme nach einem der Patentansprüche 11 und 12 bei der vorgeschlagenen Anordnung zur Durchführung des Verfahrens nach der Erfindung in vorteilhafter Weise ermöglicht, während einer Umschaltung in veränderlichem Maße auftretende Reibwertschwankungen zu berücksichtigen.

Bei der vorgeschlagenen Anordnung zur Durchführung des Verfahrens nach der Erfindung kann schließlich eine indirekte Ermittlung der Getriebeeingangsdrehzahl nach Patentanspruch 13 oder 14 in denjenigen Fällen besonders vorteilhaft sein, bei denen ein hydrodynamischer Drehmomentwandler im Kraftfluß dem Gangwechselgetriebe vorgeschaltet ist. Denn die Zugänglichkeit des Turbinenrades oder der oftmals die Getriebeeingangswelle selbst bildenden Turbinenradwelle bzw. die Anordnung von Drehzahlsensoren in diesem Getriebebereich kann erschwert sein, bspw. weil die drei Schaufelräder in einem geschlossenen Wandlergehäuse arbeiten.

Bei der vorgeschlagenen Anordnung zur Durchführung des Verfahrens nach der Erfindung haben sich bei Anwendung auf die Steuerung einer Brennkraftmaschine mit einem Abgaskatalysator und mit je einer λ-Sonde vor und nach dem Abgaskatalysator die Maßnahmen bzw. Ausgestaltungen nach Patentanspruch 15 und/oder 16 als vorteilhaft ergeben.

Bei der vorgeschlagenen Anordnung zur Durchführung des Verfahrens nach der Erfindung haben sich bei Anwendung auf die Steuerung einer Brennkraftmaschine zur Vermeidung anormaler Verbrennung, sogenannten Klopfens, die Maßnahmen bzw. Ausgestaltungen nach einem der Patentansprüche 17 bis 19 als vorteilhaft ergeben.

Die Erfindung ist nachstehend anhand mehrerer Ausführungsformen, die in der Zeichnung schematisch dargestellt sind, näher erläutert. In der Zeichnung bedeuten

Figur 1
die Darstellung des Verfahrens und einer Anordnung gemäß der Erfindung in einer ersten Ausführungsform zur Steuerung eines Gangwechselgetriebes mit einer selbsttätigen Schaltvorrichtung anhand eines Blockschaltbildes,

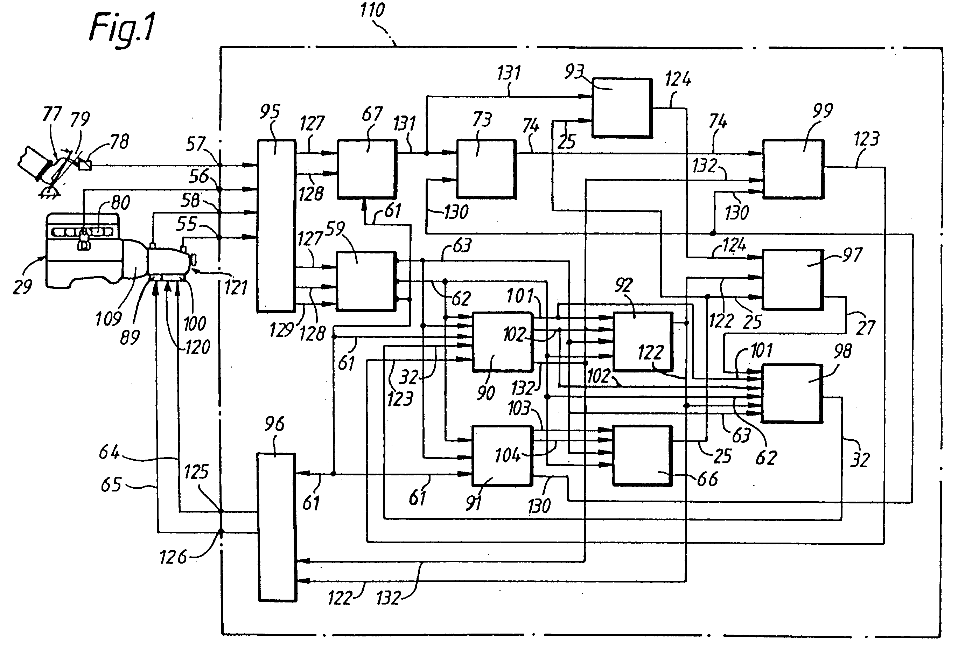

Figuren 2 bis 4
die Darstellung von drei verschiedenen Schaltungen bei der ersten Ausführungsform anhand maßgeblicher Funktionsstufen als Teile des Blockschaltbildes von Figur 1,

Figuren 5 bis 7
nähere Darstellungen von drei Funktionsstufen des Blockschaltbildes von Figur 1,

Figur 8
eine perspektivische Darstellung eines Kennfeldes von Sollwerten bei dem Speicher 91 im Blockschaltbild von Figur 1,

Figur 9
eine perspektivische Darstellung eines Kennfeldes von Korrekturwerten bei dem Speicher 90 im Blockschaltbild von Figur 1,

Figur 10
eine Erläuterung zur Funktion der Übertragungsstufe 98 im Blockschaltbild von Figur 1,

Figur 11
eine Variante der erfindungsgemäßen Steuerung des Gangwechselgetriebes nach den Figuren 1 bis 10 als eine zweite Ausführungsform,

Figur 12
eine Variante der erfindungsgemäßen Steuerung des Gangwechselgetriebes nach den Figuren 1 bis 11 als eine dritte Ausführungsform,

Figur 13
eine Variante der erfindungsgemäßen Steuerung des Gangwechselgetriebes nach den Figuren 1 bis 10 als eine vierte Ausführungsform,

Figur 14
eine Variante der erfindungsgemäßen Steuerung des Gangwechselgetriebes nach den Figuren 1 bis 13 als eine fünfte Ausführungsform,

Figur 15
eine Variante der erfindungsgemäßen Steuerung des Gangwechselgetriebes nach den Figuren 1 bis 14 als eine sechste Ausführungsform,

Figur 16
die Darstellung des Verfahrens und der Anordnung gemäß der Erfindung in einer siebten Ausführungsform zur Steuerung einer Brennkraftmaschine mit einem Abgaskatalysator und mit je einer λ-Sonde vor und hinter dem Abgaskatalysator anhand eines Blockschaltbildes,

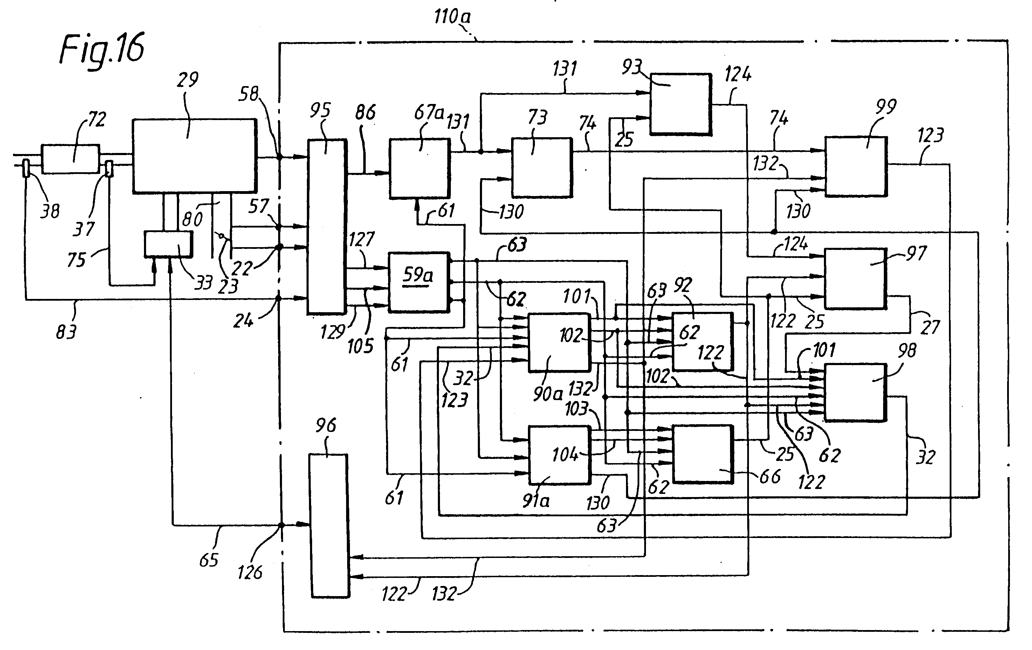

Figur 17
eine Erläuterung von Funktionsstufen im Blockschaltbild von Figur 16,

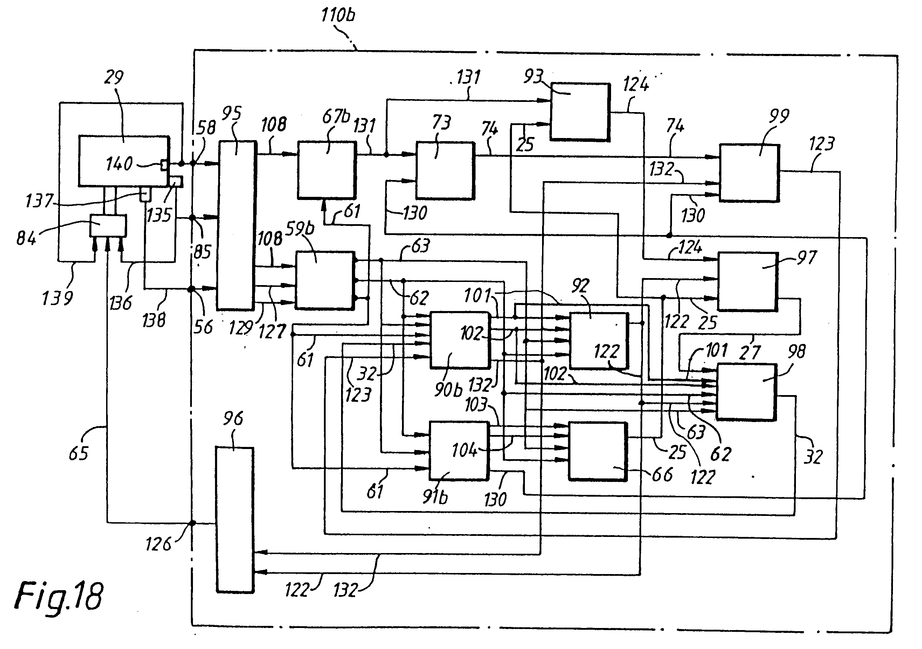

Figur 18
die Darstellung des Verfahrens und der Anordnung gemäß der Erfindung in einer achten Ausführungsform zur Steuerung einer Brennkraftmaschine mit einer Regelvorrichtung zur Vermeidung anomaler Verbrennung anhand eines Blockschaltbildes,

Figur 19

eine Erläuterung von Funktionsstufen im Blockschaltbild von Figur 18, und

Figur 20

einen dem Blockschaltbild in Figur 1 der ersten Ausführungsform zugehörigen Signalflußplan.

Unter Bezugnahme auf die Figuren 1 bis 15 werden zunächst die auf die Steuerung eines Gangwechselgetriebes abgestellten Ausführungsformen des Verfahrens und der Anordnung nach der Erfindung beschrieben.

Ein Kraftfahrzeug wird von einem Antriebsaggregat angetrieben das eine Brennkraftmaschine 29 und ein im Kraftfluß über einen hydrodynamischen Drehmomentwandler 109 nachgeordnetes Planetenräder-Gangwechselgetriebe 121 aufweist. Eine von einer elektronischen Steuereinheit 110 gesteuerte selbsttätige Schaltvorrichtung 120 des Gangwechselgetriebes 121 arbeitet mit Reibelementen, d. h. Gangkupplungen 111 und 112 der Lamellenbauart, Gangbremsen 52 und 113 mit Bremsbandbetätigung und einer Gangbremse 114 der Lamellenbauart.

Das Gangwechselgetriebe 121 weist ein mit den Reibelementen 52, 111, 112 und 114 sowie mit einer Getriebeeingangswelle 50 verbundenes Ravigneaux-Getriebe 115 und einen von letzterem antreibbaren einstegigen Planetenrädersatz 116 auf, welcher mit den Reibelementen 112, 113 sowie mit einer Getriebeausgangswelle 117 verbunden ist, welche in üblicher Weise wenigstens eine Fahrzeugachse über einen entsprechenden Achsantrieb antreibt.

Während für die Drehzahl $n_2$ der Getriebeausgangswelle 117 über eine übliche Tachometerantriebswelle oder -anzeige ein analoges Signal für einen Eingang 55 der Steuereinheit 110 im allgemeinen bereits zur Verfügung steht, ist die

Getriebeeingangswelle 50 für die unmittelbare Erfassung ihrer Drehzahl $n_1$ oftmals schwer zugänglich.

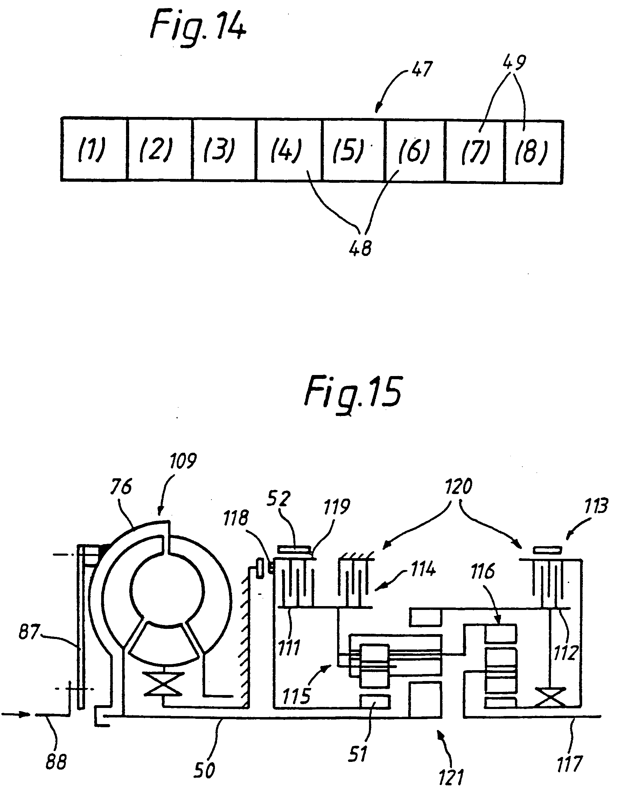

Wenn - wie in Figur 15 angedeutet - ein mit einem weiteren Eingang 58 der Steuereinheit 110 verbundener Drehzahlsignalgeber 118 nicht direkt zur Getriebeeingangswelle 50 drehfest angeordnet werden kann, ist eine Anordnung an einer radial außen liegenden Bremstrommel 119 der Gangbremse 52 oftmals einfacher.

Die an ihrem inneren Wellenende mit einem Getriebeglied des Ravigneaux-Getriebes 115 verbundene Getriebeeingangswelle 50 durchsetzt eine ein weiteres Getriebeglied 51 des Getriebes 115 mit der Bremstrommel 119 verbindende Hohlwelle sowie eine sich anschließende gehäusefeste Statorwelle, um dann mit ihrem vorderen Wellenende in das Wandlergehäuse 76 des Drehmomentwandlers 109 hineinzuragen, welches über eine Antriebsscheibe 87 mit der Kurbelwelle 88 der Brennkraftmaschine 29 verbunden ist.

Im übrigen ist es Stand der Technik, wie das Gangwechselgetriebe 121 im einzelnen aufgebaut ist und wie die in diesem Falle vorgesehenen vier Vorwärtsgänge geschaltet werden, zwischen denen drei Hochschaltungen und drei Rückschaltungen - also insgesamt sechs Umschaltungen möglich sind. Die Reibelemente werden in bekannter Weise durch hydraulische Schaltstellglieder der Axialkolben-Bauart betätigt, welche mit einem Schalt- bzw. Arbeitsdruck betrieben werden, welcher u. a. durch ein Moduliersignal beeinflußbar ist, welches von einem Ausgang 126 der Steuereinheit 110 abgenommen und über eine Leitung 65 auf ein hierfür vorgesehenes Druckregelventil 89 der Schaltvorrichtung 120 geschaltet wird.

Die Leistungssteuerung des Antriebsaggregates erfolgt von einem Fahrpedal 77 aus, das über ein Potentiometer 78 mit einem dritten Eingang 57 der Steuereinheit 110 verbunden ist, so daß an diesem ein zur Stellung 79 des Fahrpedales 77 analoges Signal anliegt. Ein Weiterer Eingang 56 der Steuereinheit 110 ist mit einem Drucksignalgeber des Luftansaugsystemes 80 der Brennkraftmaschine 29 verbunden, um ein zur Motorlast analoges Signal für die Steuereinheit 110 zu erhalten.

Die Steuereinheit 110 weist mit ihren Eingängen 55 bis 58 verbundene Signalaufbereitungsstufen 95, einen weiteren Ausgang 125 sowie mit ihren Ausgängen 125 und 126 verbundene Endstufen 96 auf. Der Ausgang 125 steht mit Schaltsteuerventilen 100 der Schaltvorrichtung 120 über eine Leitung 64 in Verbindung.

Die Steuereinheit 110 ist desweiteren im Prinzip wie folgt aufgebaut:

Die Signalaufbereitungsstufen 95 sind durch Leitungen 127 und 128 für der Getriebeeingangs- und ausgangsdrehzahl $n_1$ und $n_2$ entsprechende Signale sowohl mit einer Meßstufe 67 zur Ermittlung des Istwertes 68 der Schaltzeit durch Erfassung der Änderung der Getriebeübersetzung $n_1/n_2$ als auch unter Vermittlung einer dritten Leitung 129 für der Last der Brennkraftmaschine 29 entsprechende Signale mit einer Erkennungsstufe 59 für den zu schaltenden Gang und den zugehörigen Betriebspunkt der Brennkraftmaschine 29 verbunden. Die Steuereinheit 110 weist eine Speicheranordnung 90, 91 auf, welche Speicherplätze bspw. in Form eines gesonderten Speichers 90 enthält, in welchen Kennfelder 30 für die Zuordnung von Korrekturwerten 26 zu ausgewählten Betriebspunkten 28 der Brennkraftmaschine 29 eingeschrieben sind. Die Speicheranordnung 90, 91 enthält ferner Speicherplätze bspw. in Form eines gesonderten Speichers 91, in welchen Kennfelder 94 für die Zuordnung von Sollwerten 36 für die Schaltzeit zu den ausgewählten Betriebspunkten 28 eingeschrieben sind.

Die Erkennungsstufe 59 ist durch eine Leitung 61 für ein den zu schaltenden Gang angebendes Schaltsignal über eine der Endstufen 96 mit dem Ausgang 125 der Steuereinheit 110 und ggfls. mit der Meßstufe 67 (zum Anstoßen des Meßvorganges) sowie durch die Leitung 61 und durch zwei weitere Leitungen 62 und 63 mit dem Speicher 90 wie auch mit dem Speicher 91 verbunden. Während die Leitung 62 für die Übermittlung eines eine Information über die dem jeweiligen Betriebspunkt zugehörige Getriebeausgangsdrehzahl $n_2$ enthaltenden Signales verwendet ist, wird durch die Leitung 63 ein Signal übertragen, welches eine Information über die dem Betriebspunkt zugehörige Last der Brennkraftmaschine 29 enthält.

Ein Ausgang des Speichers 91 ist durch eine Leitung 130 zur Übertragung eines Signales, welches eine Information über den Sollwert 36 eines ausgewählten Betriebspunktes 28 enthält, mit dem Eingang einer Komparatorstufe 73 verbunden, auf deren anderen Eingang der Ausgang der Meßstufe 67 über eine Leitung 131 geschaltet ist. Ein Ausgang des Speichers 90 ist durch eine Leitung 132 zur Übertragung eines Signales, welches eine Information über den jeweiligen, einem ausgewählten Betriebspunkt 28 zugehörigen Korrekturwert 26 enthält, über eine der Endstufen 96 mit dem Ausgang 126 der Steuereinheit 110 verbunden.

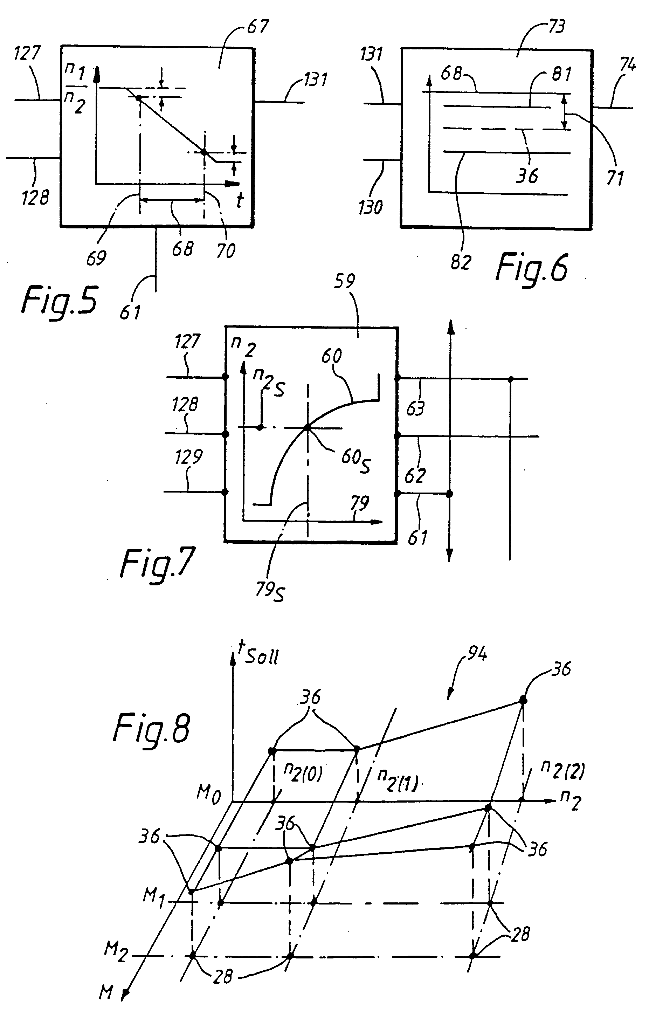

Wie Figur 5 zeigt, wird in der Meßstufe 67 der Istwert 68 der Schaltzeit durch die Erfassung der Änderung der Getriebeübersetzung $n_1/n_2$ ermittelt, wobei der Beginn 69 und das Ende 70 dieser Änderung um ein durch die Empfindlichkeit des Meßgerätes bedingtes Maß vom tatsächlichen Schaltvorgang abweicht. Am Ausgang der Meßstufe 67 steht dann ein dem Istwert 68 entsprechendes Signal an. Gemäß Figur 6 wird in der Komparatorstufe 73 ein Vergleich zwischen dem über die Leitung 131 eingegebenen Istwert 68 und einem einer der ausgewählten Betriebspunkte 28 zugehörigen Sollwert 36 statt, welcher über die Leitung 130 eingegeben wird. Nur in denjenigen Fällen, in denen die Abweichung 71 einen oberen Schwellwert 81 oder einen unteren Schwellwert 82 dem Betrage nach übersteigt, steht an dem mit einer Leitung 74 verbundenen Ausgang der Komparatorstufe 73 ein Signal an, welches eine Information über den Istwert 68 enthält.

In der Erkennungsstufe 59 sind für jede der sechs möglichen Umschaltungen je eine Schaltlinie 60 als geometrischer Ort für die Schaltpunkte $60_S$ abgespeichert, welche jeweils durch eine bestimmte Getriebeausgangsdrehzahl $n_{2S}$ und eine bestimmte Fahrpedalstellung $79_S$ festgelegt sind. Durchläuft demnach die Getriebeausgangsdrehzahl $n_2$ gemäß Figur 7 bei einer bestimmten konstanten Fahrpedalstellung $79_S$ (oder einem bestimmten zugehörigen Motordrehmoment) die Schaltlinie 60 nach oben oder unten, wird in dem betreffenden Schaltpunkt $60_S$ eine Umschaltung ausgelöst. In diesem Falle steht an dem mit der Leitung 61 verbundenen Ausgang der Erkennungsstufe 59 - wie schon weiter oben angedeutet - ein Signal an, welches eine Information über den zu schaltenden Gang enthält. An dem mit der Leitung 62 verbundenen Ausgang erscheint ein eine Information über die Getriebeausgangsdrehzahl $n_{2S}$ des Schaltpunktes enthältendes Signal, während an dem mit der Leitung 63 verbundenen Ausgang ein Signal ansteht, welches eine Information über die Fahrpedalstellung bzw. das Motordrehmoment $79_S$ des Schaltpunktes enthält.

In dem Speicher 91 sind für jede der sechs möglichen Umschaltungen je ein Kennfeld 94 abgelegt, von denen in Figur 8 eines schematisch dargestellt ist.

Danach sind neun Betriebspunkte 28 der Brennkraftmaschine 29 ausgewählt, die durch ein bestimmtes Drehmoment $M_0$ bzw. $M_1$ bzw. $M_2$ gekennzeichnet sind, welchem eine jeweilige Getriebeausgangsdrehzahl $n_{2(0)}$ bzw. $n_{2(1)}$ bzw. $n_{2(2)}$ zugehörig ist, die wiederum einer bestimmten Brennkraftmaschinendrehzahl entspricht, was durch die Zuordnung des Kennfeldes zu der jeweiligen Getriebeübersetzung und seine Adressierung über das zugehörige Gangsignal der Leitung 61 berücksichtigt ist. Den neun ausgewählten Betriebspunkten 28 - die im übrigen für alle sechs Kennfelder 94 in ihren Koordinaten $M_x$ und $n_{2(x)}$ identisch sind - sind je ein bestimmter Sollwert 36 für die Schaltzeit zugeordnet. Es sind für die neun Sollwerte 36 nur vier verschiedene Beträge vorgesehen und deren Verteilung bspw. so vorgenommen, daß den drei Betriebspunkten 28 mit der Koordinate $n_{2(0)}$ sowie den beiden Betriebspunkten 28 mit den Koordinaten $M_0/n_{2(1)}$ und $M_1/n_{2(1)}$ insgesamt fünf dem ersten Betrage nach identische Sollwerte 36 zugeordnet sind. Die Sollwerte 36 der beiden Betriebspunkte 28 mit den Koordinaten $M_2/n_{2(1)}$ und $M_2/n_{2(2)}$ sind dem Betrage nach einander gleich, von den übrigen Sollwerten jedoch verschieden. Die Sollwerte 36 der übrigen beiden Betriebspunkte 28 mit den Koordinaten $M_0/n_{2(2)}$ und $M_1/n_{2(2)}$ sind dem Betrage nach sowohl untereinander als auch von den übrigen Sollwerten 36 verschieden.

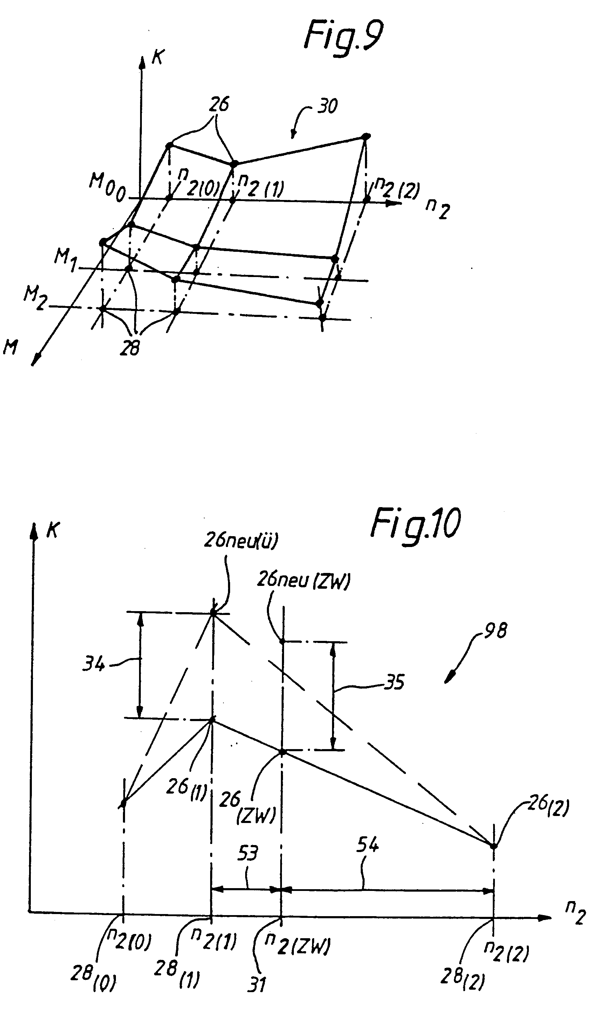

In dem Speicher 90 sind für jede der sechs möglichen Umschaltungen je ein Kennfeld 30 abgelegt, von denen eines in Figur 9 schematisch dargestellt ist. Danach sind neun Betriebspunkte 28 ausgewählt, welche in ihren Koordinaten $M_x$ und $n_{2(x)}$ sowohl für alle Kennfelder 30 des Speichers 90 als auch mit den ausgewählten Betriebspunkten 28 der Kennfelder 94 des Speichers 91 identisch sind. Auch die Kennfelder 30 werden über das jeweilige Gangsignal der Leitung 61 adressiert, so daß die Gangübersetzung berücksichtigt ist.

Den neun ausgewählten Betriebspunkten 28 eines Kennfeldes 30 sind je ein Korrekturwert 26 zugeordnet, wobei alle neun Korrekturwerte 26 dem Betrage nach voneinander verschieden sein können.

Gelangt das Kraftfahrzeug in einen Fahrzustand, bei dem eine Schaltlinie 60 in einem der neun ausgewählten Betriebspunkte 28 durchlaufen wird, dann stößt die Erkennungsstufe 59 über die Leitung 61 die für die vorzunehmende Umschaltung vorgesehenen Schaltsteuerventile 100 in der Schaltvorrichtung 120 ebenso an wie die jeweils zugehörigen Kennfelder 30 und 94 der Speicheranordnung 90, 91 und ggfls. auch noch die Meßstufe 67, wenn letztere nicht durch den Beginn der Änderung der Getriebeübersetzung $n_1/n_2$ selbst angeregt wird.

Anhand der in den Leitungen 62 und 63 übertragenen Koordinaten-Werte $n_{2(x)}$ und $M_x$ wird in dem durch das Gangsignal der Leitung 61 adressierten Kennfeld 30 des Speichers 90 der dem betreffenden ausgewählten Betriebspunkt 28 zugeordnete Korrekturwert 26 ermittelt und ein entsprechendes Signal durch die vom Speicher 90 abgehende Leitung 132 über eine der zwischengeschalteten Endstufen 96 auf das Regelventil 89 geschaltet.

Anhand der in den Leitungen 62 und 63 übertragenen Koordinaten-Werte $n_{2(x)}$ und $M_x$ wird in dem ebenfalls durch das Gangsignal der Leitung 61 adressierten Kennfeld 94 des Speichers 91 der dem betreffenden ausgewählten Betriebspunkt 28 zugeordnete Sollwert ermittelt und über die Leitung 130 auf die Komparatorstufe 73 geschaltet, in welche nach Beendigung der Umschaltung der von der Meßstufe 67 ermittelte Istwert 68 über die Leitung 131 eingegeben wird. Liegt die Abweichung 71 innerhalb des durch die Schwellwerte 81 und 82 vorgegebenen Toleranz-Fensters, wird eine Adaption des betreffenden Kennfeldes 30 nicht vorgenommen.

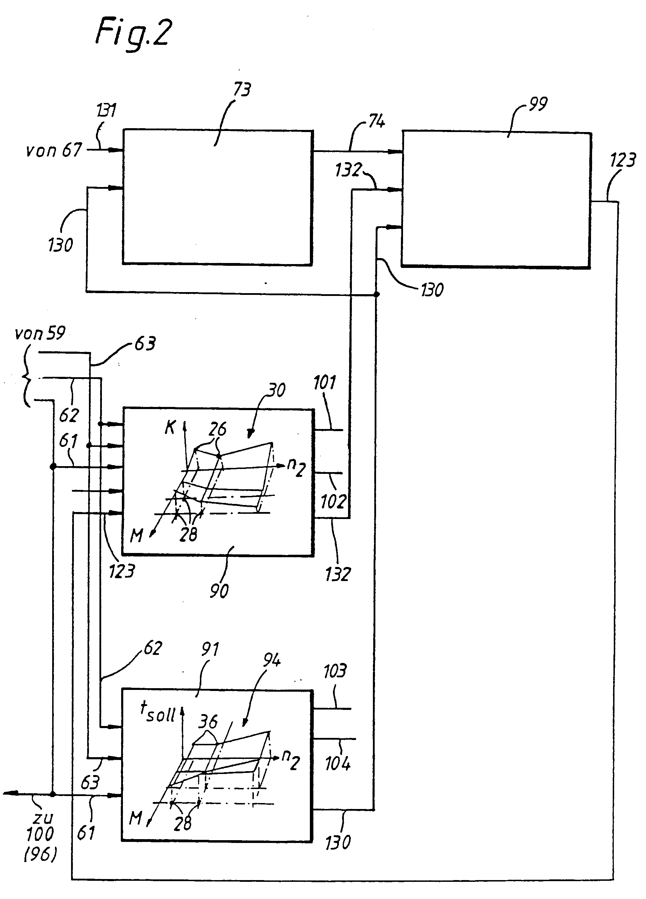

Für den Fall, daß bei der zuletzt beschriebenen Umschaltung in einem der ausgewählten Betriebspunkte 28 die Abweichung 71 des Istwertes 68 vom Sollwert 36 außerhalb des Toleranz-Fensters 81, 82 liegt, ist folgende Anordnung getroffen (Figur 2):

Es ist eine Rechenstufe 99 für die Ermittlung eines neuen Korrekturwertes $K_{neu}$ vorgesehen, welche eingangsseitig über eine Leitung 74 mit der Komparatorstufe 73 sowie mit den Leitungen 130 und 132 und ausgangsseitig über eine Leitung 123 mit einem Eingang des Speichers 90 verbunden ist.

Die Komparatorstufe 73 schaltet bei außerhalb des Toleranz-Fensters 81, 82 liegender Abweichung 71 den Istwert 68 der Schaltzeit auf die Meßstufe 99, an der über die Leitungen 130 und 132 noch der Sollwert 36 und der alte Korrekturwert 26 in Form von Signalen anliegen. Die Meßstufe 99 liefert an ihrem mit der Leitung 123 verbundenen Ausgang ein Signal, das einem neuen Korrekturwert $K_{neu}$ entspricht, welcher von dem alten Korrekturwert K, der bis zur vorangegangenen Umschaltung in dem betreffenden ausgewählten Betriebspunkt 28 eingeschrieben war, nach der Beziehung $K_{neu} = (t_{ist}/t_{soll}) \cdot K$ abhängig ist. Dieser neue Korrekturwert $K_{neu}$ den ausgewählten Betriebspunkt 28 des Kennfeldes 30 der vorangegangenen Umschaltung über die Leitung 123 eingeschrieben.

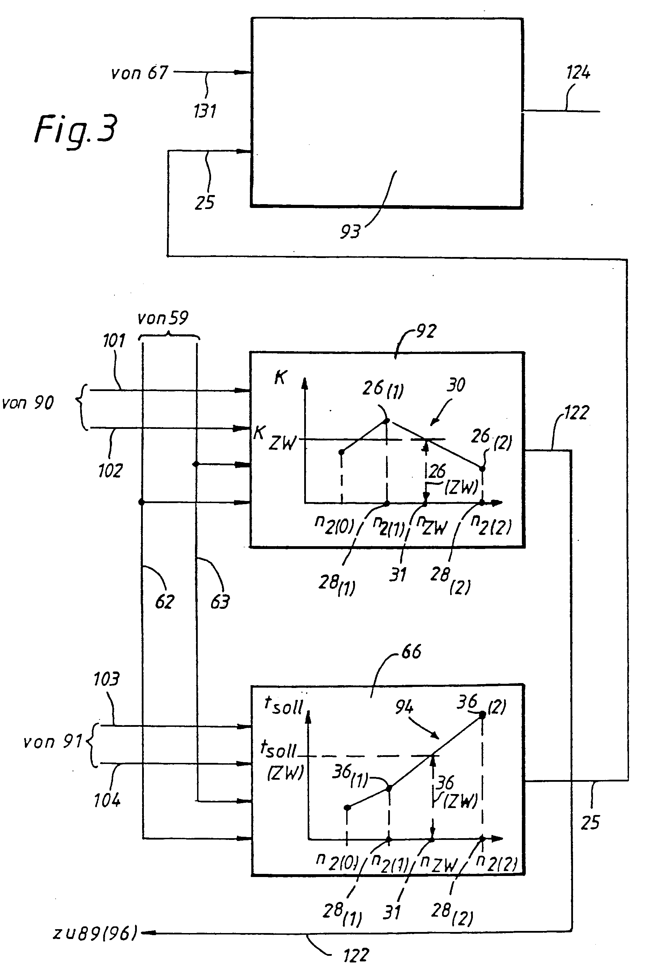

Für den Fall, daß das Kraftfahrzeug in einen Fahrzustand gelangt, bei dem eine Schaltlinie 60 nicht in einem der neun ausgewählten Betriebspunkte 28 - sondern in einem nicht ausgewählten Betriebspunkt 31, bspw. bei einer Getriebeausgangsdrehzahl $n_{2(ZW)}$, welche gemäß Figur 10 zwischen den Getriebeausgangsdrehzahlen $n_{2(1)}$ und $n_{2(2)}$ liegt, durchfahren wird, ist weiterhin folgende Anordnung getroffen (Figur 3):

Es ist eine Rechenstufe 66 zur jeweiligen Interpolation eines Zwischenwertes $t_{soll(ZW)}$ aus den zwei Sollwerten $t_{soll(1)}$ und $t_{soll(2)}$ der Schaltzeit der dem nicht ausgewählten Betriebspunkt 31 benachbarten beiden ausgewählten Betriebspunkte 28 mit den Koordinaten-Werten $n_{2(1)}$ und $n_{2(2)}$ vorgesehen. Weiterhin ist eine Rechenstufe 92 zur jeweiligen Interpolation eines Zwischenwertes $K_{ZW}$ aus den zwei Korrekturwerten $K_{(1)}$ und $K_{(2)}$ der benachbarten beiden ausgewählten Betriebspunkte 28 mit den Koordinaten-Werten $n_{2(1)}$ und $n_{2(2)}$ vorgesehen. Desweiteren ist eine Komparatorstufe 93 für den Vergleich mit dem jeweiligen Zwischenwert $t_{soll(ZW)}$ des Sollwertes vorgesehen. Der Ausgang der Rechenstufe 66 ist über eine Leitung 25 mit dem einen Eingang der Komparatorstufe 93 verbunden, an deren anderen Eingang die von der Meßstufe 67 abgehende Leitung 131 angeschlossen ist. Der Ausgang der Rechenstufe 92 ist durch eine Leitung 122 über eine der Endstufen 96 mit dem Ausgang 126 verbunden. An den Ausgang der Komparatorstufe 93 ist eine Leitung 124 angeschlossen.

Die Rechenstufe 66 ist eingangsseitig sowohl mit den von der Erkennungsstufe 59 abgehenden Leitungen 62 und 63 als auch mit zwei von Ausgängen des Speichers 91 abgehenden Leitungen 103 und 104 verbunden.

Die Rechenstufe 92 ist eingangsseitig ebenfalls mit den beiden von der Erkennungsstufe 59 abgehenden Leitungen 62 und 63 sowie mit zwei von Ausgängen des Speichers 90 abgehenden Leitungen 101 und 102 verbunden.

In die Rechenstufe 66 werden über die Leitungen 62 und 63 die Koordinatenwerte $n_{2(ZW)}$ und $M_{d(ZW)}$

des nichtausgewählten Betriebspunktes 31 im Kennfeld 94 und über die Leitungen 103 und 104 die den im Kennfeld 94 dem nicht ausgewählten Betriebspunkt 31 benachbarten beiden ausgewählten Betriebspunkten $28_{(1)}$ und $28_{(2)}$ zugehörigen Sollwerte $36_{(1)}$ und $36_{(2)}$ eingegeben. Aus diesen Daten des Kennfeldes 94 interpoliert die Rechenstufe 66 den dem nicht ausgewählten Betriebspunkt 31 zugehörigen Zwischenwert $36_{(ZW)}$ des Sollwertes, mit welchem die Komparatorstufe 93 über die Leitung 25 beschaltet wird.

Die Funktion der Rechenstufe 66 ist zum leichteren Verständnis vereinfacht dargestellt. Der nicht ausgewählte Betriebspunkt 31 liegt im allgemeinen in der durch die $n_2$-Achse und die Md-Achse des räumlichen Koordinatensystemes bestimmten $n_2$-Md-Ebene. Diese Lage wird in der Rechenstufe 66 durch die Verarbeitung des $Md_{(ZW)}$-Koordinatenwertes zusätzlich noch berücksichtigt. Diese vereinfachte Darstellung gilt auch für die Erläuterung der Funktion der Rechenstufe 92, der über die Leitungen 62 und 63 wiederum die Koordinatenwerte $n_{2(ZW)}$ und $Md_{(ZW)}$ des nicht ausgewählten Betriebspunktes 31 im Kennfeld 30 eingegeben werden. Die Rechenstufe 92 ist weiterhin über die Leitungen 101 und 102 mit den Korrekturwerten $26_{(1)}$ und $26_{(2)}$ der im Kennfeld 30 den dem nicht ausgewählten Betriebspunkt 31 benachbarten beiden ausgewählten Betriebspunkte $28_{(1)}$ und $28_{(2)}$ beschaltet. Aus diesen Daten des Kennfeldes 30 interpoliert die Rechenstufe 92 den dem nicht ausgewählten Betriebspunkt 31 zugehörigen Zwischenwert $26_{(ZW)}$ des Korrekturwertes, welcher über die Leitung 122 am Ausgang 126 ansteht und über die Leitung 65 das Druckregelventil 89 bei der momentanen Umschaltung beaufschlagt.

Die Komparatorstufe 93 arbeitet im Prinzip in der gleichen Weise wie die Komparatorstufe 73. Jedoch wird für den Sollwert-Istwert-Vergleich der über die Leitung 25 anstehende Zwischenwert $36_{(ZW)}$ verwendet, wobei auch die Schwellwerte des Toleranz-Fensters für den über die Leitung 131 anstehenden Istwert 68 der Meßstufe 67 abweichend von der Komparatorstufe 73 ausgelegt sein können. Liegt dieser Istwert 68 innerhalb des Toleranz-Fensters, dann erscheint an dem Ausgang der Komparatorstufe 93 kein Signal, so daß eine Adaption des Kennfeldes 30 unterbleibt.

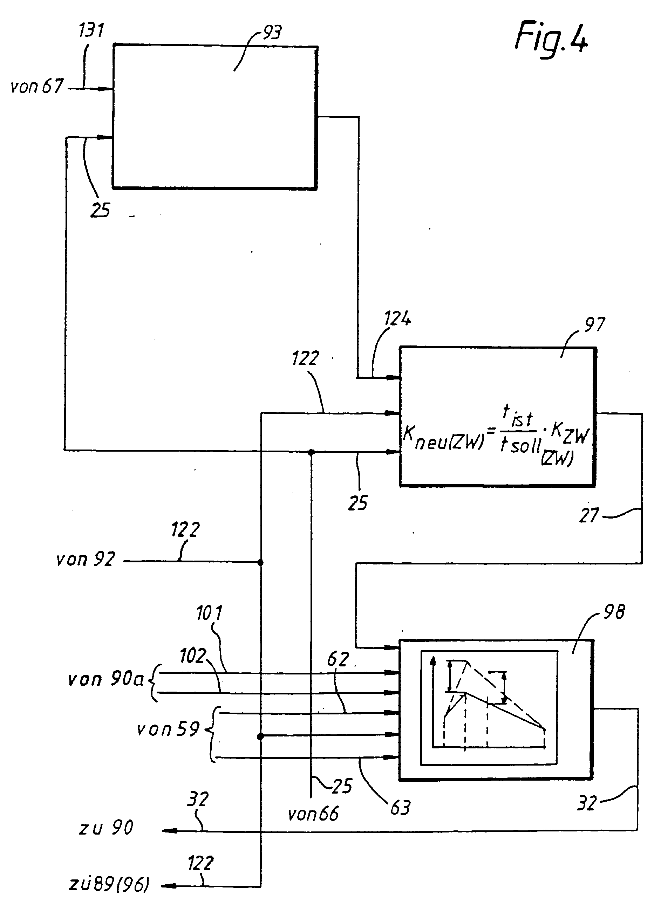

Für den Fall, daß nach der zuletzt beschriebenen Umschaltung in einem nicht ausgewählten Betriebspunkt 31 eine außerhalb des Toleranz-Fensters liegende Abweichung gemessen wurde, ist folgende Anordnung getroffen (Figur 4):

Die von der Rechenstufe 66 abgehende Leitung 25 und die von der Rechenstufe 92 abgehende Leitung 122 sowie die von der Komparatorstufe 93 abgehende Leitung 124 sind auf zugehörige Eingänge einer noch vorgesehenen Rechenstufe 97 geschaltet, welche ausgangsseitig über eine Leitung 27 zusammen mit den von der Erkennungsstufe 59 abgehenden Leitungen 62 und 63 auf korrespondierende Eingänge einer weiterhin noch vorgesehenen Übertragungsstufe 98 geschaltet sind, welche eingangsseitig noch an die Leitungen 101 und 102 des Speichers 90 angeschlossen und ausgangsseitig über eine Leitung 32 mit einem Eingang des Speichers 90 verbunden ist.

Die Rechenstufe 97 ermittelt einen dem nicht ausgewählten Betriebspunkt 31 zugehörigen neuen Korrekturwert $K_{neu(ZW)}$ aus dem über die Leitung 25 anstehenden Sollwert $t_{soll(ZW)}$ des nicht ausgewählten Betriebspunktes 31 und aus dem über die Leitung 122 anstehenden Korrekturwert $K_{ZW}$ des nicht ausgewählten Betriebspunktes 31 sowie aus dem über die Leitung 124 anstehenden Istwert $t_{ist}$ nach der Beziehung

$$K_{neu(ZW)} = (t_{ist}/t_{soll(ZW)}) \cdot K_{ZW}$$

Die Übertragungsstufe 98 ermittelt zunächst den Differenzwert 35 = $(K_{neu(ZW)} - K_{ZW})$ sowie die Lagekoordinate 53 des am nächsten liegenden ausgewählten Betriebspunktes $28_{(1)}$. Für diesen am nächsten liegenden Betriebspunkt $28_{(1)}$ ermittelt die Übertragungsstufe 98 einen neuen übertragenen Korrekturwert $K_{neu(ü)}$, welcher sich um einen Differenzwert 34 von dem bisherigen Korrekturwert $26_{(1)}$ des am nächsten liegenden ausgewählten Betriebspunktes $28_{(1)}$ unterscheidet. Aus Dämpfungsgründen ist im Ausführungsbeispiel die Differenz 34 gleich der Differenz 35 ausgelegt. Über die Leitung 32 wird der neue übertragene Korrekturwert $K_{neu(ü)}$ in den Speicher 90 eingeschrieben.

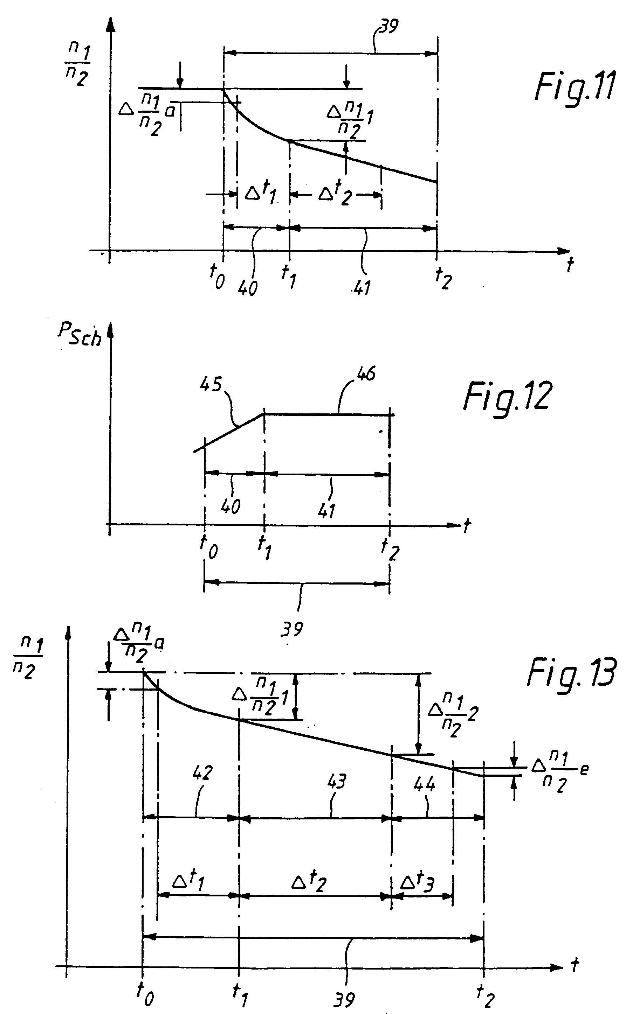

Bei einer von dem Verfahren und der Anordnung nach der vorangehenden Beschreibung abweichenden Variante der Erfindung gemäß den Figuren 11 und 12 werden für zwei innerhalb der Schaltzeit 39 liegende aufeinander folgende Phasen 40 und 41 je ein gesonderter Sollwert-Istwert-Vergleich zur Ermittlung je eines Korrekturwertes 45 bzw. 46 durchgeführt und der Schaltdruck $p_{sch}$ entsprechend phasenweise korrigiert.

Während in der Schaltphase 40 die Messung des Istwertes 68 über die Erfassung der Dauer $\delta t_1$ der Änderung der Getriebeübersetzung $n_1/n_2$ erfolgt und daher mit der Ausführungsform der Figur 1/5 übereinstimmt, kann der Istwert 68 für die zweite Schaltphase 41 durch eine andere Zeitmeß-Methode ermittelt sein. Für beide Schaltphasen 40 und 41 sind je ein besonderer Satz von Kennfeldern für Soll- und Korrekturwerte erforderlich, die gemäß der Ausführungsform der Figur 1 zum Modulieren des Schaltdruckes und bei unzulässigen Abweichungen der Schaltzeit zur Adaption der Korrekturwerte verwendet werden.

Bei einer weiteren Variante der Erfindung gemäß der Figur 13 ist die Schaltzeit 39 in drei aufeinander folgende Phasen 42, 43 und 44 unterteilt, in denen jeweils der Istwert 68 der Schaltteilzeit durch die Erfassung der Dauer $\delta t_1$ bzw. $\delta t_2$ bzw. $\delta t_3$ der Änderung der Getriebeübersetzung $n_1/n_2$ gemessen wird. Für jede der drei Schaltphasen 42, 43 und 44 sind jeweils sechs Sätze von Kennfeldern für Soll- und Korrekturwerte erforderlich, die gemäß der Ausführungsform der Figur 1 zur Beeinflussung des Schaltdruckes und ggfls. zur Adaption der Kennfelder für die Korrekturwerte herangezogen werden. Diese Variante der Figur 13 berücksichtigt in vorteilhafter Weise die bei Beginn und Ende der Umschaltung auftretenden Reibwertschwankungen an den Reibelementen.

Bei einer weiteren Variante der Erfindung gemäß der Figur 14 ist für die Kennfelder 30 und 94 von Korrektur- und Sollwerten ein gemeinsamer Speicher vorgesehen, bei welchem die Aufteilung in einem Speicherwort 47 so getroffen ist, daß sechs Speicherplätze 48 für die Einschreibung von Korrekturwerten 26 eines Kennfeldes 30 und zwei Speicherplätze 49 für die Einschreibung von Sollwerten 36 eines Kennfeldes 94 verwendet sind. Da die sechs Kennfelder 30 insgesamt nur 54 ausgewählte Betriebspunkte 28 enthalten, verbleibt eine freie Speicherkapazität für zehn zusätzliche Korrekturwerte. Die vier möglichen Sollwerte 36 der Speicherplätze 49 sind nach bestimmten Gesichtspunkten den neun ausgewählten Betriebspunkten 28 zugeordnet.

Die Verteilung der ausgewählten Betriebspunkte 28 in der durch die Achsen Md und $n_2$ des räumlichen Koordinatensystemes bestimmten Md-$n_2$-Ebene ist nicht gleichmäßig, sondern in schaltqualitätsempfindlichen Bereichen enger.

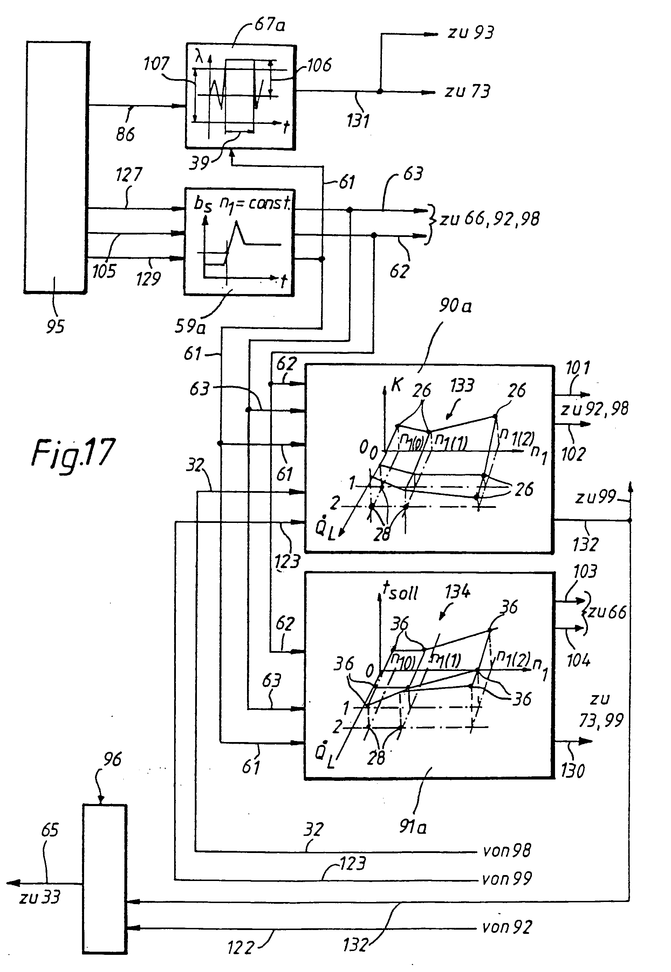

In den Figuren 16 und 17 ist die Anwendung des Verfahrens und der Anordnung nach der Erfindung auf eine Brennkraftmaschine 29 mit einem Abgaskatalysator 72 schematisch dargestellt. In dem Abgasleitungssystem dieser Brennkraftmaschine 29 ist stromauf zum Abgaskatalysator 72 eine $\lambda$-Sonde (Regelsonde) 37 angeordnet, die bei Abweichungen der Kraftstoff-Luft-Gemischzusammensetzung vom stöchiometrischen Luft-Kraftstoff-Verhältnis - wenn also die Luftzahl $\lambda \neq 1$ ist - über eine Leitung 75 ein Ausgangssignal auf einen $\lambda$-Regler 33 gibt, welcher in Abhängigkeit hiervon und unter Berücksichtigung der von der Brennkraftmaschine 29 über ihr Ansaugleitungssystem 80 angesaugten zeitlichen Menge $\dot{Q}_L$ der Verbrennungsluft die zeitliche Einspritzmenge des Kraftstoffes einstellt. In dem Abgasleitungssystem der Bremmkraftmaschine 29 ist stromab zum Abgaskatalysator 72 eine weitere $\lambda$-Sonde (Prüfsonde) 38 angeordnet, welche den Restsauerstoffgehalt des Abgases mißt und somit ebenfalls bei Abweichungen vom stöchiometrischen Verhältnis ein Prüfsondensignal abgibt, welches über eine Leitung 83 auf einen Eingang 24 einer elektronischen Steuereinheit 110a geschaltet wird. Auf einen weiteren Eingang 22 der Steuereinheit 110a ist ein Signal schaltbar, welches eine Information über die Beschleunigung $b_S$ einer Stauscheibe 23 enthält, welche in dem Ansaugleitungssystem 80 angeordnet und zur Messung der angesaugten zeitlichen Menge $Q_L$ der Verbrennungsluft verwendet ist. Auf einen dritten Eingang 57 der Steuereinheit 110a ist ein Signal schaltbar, welches eine Information über die zeitliche Menge $Q_L$ der angesaugten Verbrennungsluft und damit über die momentane Drehmomentlast der Brennkraftmaschine 29 enthält. Schließlich ist auf einen vierten Eingang 58 der Steuereinheit 110a ein Signal schaltbar, welches eine Information über die momentane Drehzahl $n_1$ der Brennkraftmaschine 29 enthält. Die Steuereinheit 110a weist mit ihren Eingängen 22, 24, 57 und 58 verbundene Signalaufbereitungsstufen 95 sowie einen mit Endstufen 96 verbundenen Ausgang 126 für Korrekturwerte auf, welcher über eine Leitung 65 auf den $\lambda$-Regler 33 geschaltet ist. In dem $\lambda$-Regler 33 werden die Signale der Leitungen 65 und 75 im Sinne einer Einstellung der Luftzahl $\lambda$ auf den Wert 1 verknüpft.

Die Signalaufbereitungsstufen 95 sind durch eine Leitung 86 mit einer Meßstufe 67a verbunden, welche zur Ermittlung des Istwertes einer Zeitspanne 39 verwendet ist und somit der Meßstufe 67 der Ausführungsformen der Figur 1 bis 15 entspricht. Die Leitung 86 führt ein Signal, welches eine Information über die von der Prüfsonde 38 ermittelte Abweichung 106 der Gemischzusammensetzung vom stöchiometrischen Verhältnis enthält. Die Meßstufe 67a ermittelt die Zeitspanne 39, in welcher diese Abweichung 106 außerhalb eines zulässigen Toleranz-Fensters 107 beiderseits des $\lambda$-Wertes 1 liegt. Der ein dem Istwert der Zeitspanne 39 entsprechendes Signal abgebende Ausgang der Meßstufe 67a ist wie bei den vorhergehenden Ausführungsbeispielen über eine Leitung 131 mit zwei Komparatorstufen 73 und 93 verbunden.

Die Steuereinheit 110a enthält eine mit den Signalaufbereitungsstufen 95 über Leitungen 105, 127 und 129 verbundene Erkennungsstufe 59a für einen instationären Betriebszustand der Brennkraftmaschine 29. Über die Leitung 105 werden fortlaufend den Ausschlaggeschwindigkeiten bzw. -beschleunigungen der Stauscheibe 23 entsprechende Signale übertragen. Eine fortlaufende Signalübertragung erfolgt auch mit der Leitung 127 für die Drehzahl $n_1$ der Brennkraftmaschine 29 wie auch mit der Leitung 129 für die angesaugte zeitliche Menge $\dot{Q}_L$ der Verbrennungsluft. Die Erkennungsstufe 59a spricht auf das Auftreten einer positiven oder negativen Beschleunigung $b_S$ der Stauscheibe 23 an, wenn dabei die Drehzahl $n_1$ der Brennkraftmaschine konstant bleibt. Fur diesen Fall treten an den jeweils an eine Leitung 61 bzw. 62 bzw. 63 angeschlossenen Ausgängen der Erkennungsstufe 59a Ausgangssignale auf - und zwar ein Taktsignal in der Leitung 61, ein einem Koordinatenwert der Drehzahl $n_1$ entsprechendes Ausgangssignal in der Leitung 62 sowie ein einem Koordinatenwert der zeitlichen Menge $\dot{Q}_L$ der Verbrennungsluft entsprechendes Ausgangssignal in der Leitung 63.

Die Steuereinheit 110a umfaßt weiterhin Speicher 90a mit abgelegten Kennfeldern 133 für die Zuordnung von Korrekturwerten 26 zu ausgewählten Betriebspunkten 28 der Brennkraftmaschine 29 sowie Speicher 91a mit abgelegten Kennfeldern 134 für die Zuordnung von Sollwerten 36 der Zeitspanne 39 zu den ausgewählten Betriebspunkten 28 der Brennkraftmaschine 29. In dem dreiachsigen Koordinatensystem des jeweiligen Kennfeldes 133 sind auf der x-Achse Koordinatenwerte $n_{1(x)}$ der Drehzahl $n_1$ der Brennkraftmaschine 29 und auf der y-Achse Korrekturwerte zur Beeinflussung der zeitlichen Einspritzmenge durch den Regler 33 sowie auf der z-Achse Koordinatenwerte $\dot{Q}_{L(Z)}$ der zeitlichen Menge $\dot{Q}_L$ der Verbrennungsluft aufgetragen. In dem dreiachsigen Kcordinatensystem des jeweiligen Kennfeldes 134 sind auf der x-Achse-Koordinatenwerte $n_{1(x)}$ der Drehzahl $n_1$ der Brennkraftmaschine 29 und auf der y-Achse Sollwerte $t_{soll}$ für die Zeitspanne 39 sowie auf der z-Achse Koordinatenwerte $\dot{Q}_{L(x)}$ der zeitlichen Mente $Q_L$ der Verbrennungsluft der Brennkraftmaschine 29 aufgetragen. Die Koordinatenwerte der Kennfelder 133 einerseits und der Kennfelder 134 andererseits sind derart identisch, daß jedem der ausgewählten Betriebspunkte 28 sowohl ein Korrekturwert 26 als auch ein Sollwert 36 zugeordnet sind. Für den gesamten Betriebsbereich der Brennkraftmaschine 29 können ein oder mehrere Kennfelder 133 bzw. ein oder mehrere Kennfelder 134 vorgesehen sein. Zur Adressierung des dem jeweiligen instationären Betriebszustandes zugehörigen Kennfeldes 133 bzw. 134 ist die aus den Speichern 90a und 91a bestehende Speicheranordnung an die Leitung 61 der Erkennungsstufe 59a angeschlossen. Zur Adressierung der dem jeweiligen ausgewählten Betriebspunkt 28 zugehörigen Speicherplätze werden die von der Erkennungsstufe 59a erzeugten Koordinaten-Signale über die Leitungen 62 und 63 auf die Speicheranordnung 90a/91a geschaltet.

Für den Fall, daß der instationäre Betriebspunkt in einem der ausgewählten Betriebspunkte 28 auftritt, tritt an einem an eine Leitung 132 angeschlossenen Ausgang des Speichers 90a ein Korrektursignal auf. Die Leitung 132 ist über eine der Endstufen 96 mit dem Ausgang 126 verbunden, so daß der λ-Regler 33 mit diesem Korrektursignal beaufschlagt wird. Zusätzlich tritt an einem an eine Leitung 130 angeschlossenen Ausgang des Speichers 91a ein Sollwertsignal auf, welches somit an dem einen Eingang der Komparatorstufe 73 anliegt. Wenn die durch das Taktsignal der Leitung 61 von der Erkennungsstufe 59 a angestoßene Meßstufe 67 a nach Ende des instationären Betriebszustandes aufgrund einer unzulässigen Abweichung 106 ein Istwertsignal ermittelt hat, liegt dieses an dem mit der Leitung 131 verbundenen anderen Eingang der Komparatorstufe 73 an.

Die bisher beschriebenen Funktionsstufen der Steuereinheit 110a zur Ermittlung des Korrekturwertes 26 für den Fall, daß der instationäre Betriebszustand, d. h. in diesem Falle der Zustand, in dem das Fahrzeug durch die Leistungsregelung der Brennkraftmaschine 29 beschleunigt oder verzögert wird, in einem der ausgewählten Betriebspunkte 28 auftritt, entsprechen somit den korrespondierenden Funktionsstufen der Steuereinheit 110 der vorangehenden Ausführungsbeispiele der Figuren 1 bis 15. Aber auch in den übrigen Funktonsstufen entsprechen die Steuereinheiten 110 und 110a einander, so daß für entsprechende Funktionen gleiche Bezugszahlen verwendet sind und zur ergänzenden Erläuterung auf die Beschreibung der vorangehenden Ausführungsformen verwiesen werden kann.

So ist zunächst der Ausgang der Komparatorstufe 73 über eine Leitung 74 auf einen Eingang einer Rechenstufe 99 zur Ermittlung eines neuen Korrekturwertes geschaltet, die eingangsseitig noch mit der Leitung 130 für den Sollwert 36 der Kennfelder 134 und mit der Leitung 132 für den Korekturwert 26 der Kennfelder 133 verbunden ist. Ergibt somit der Vergleich in der Komparatorstufe 73 eine unzulässige Abweichung, dann ermittelt die Rechenstufe 99 einen neuen Korrekturwert $K_{neu}$, welcher über die an den Ausgang der Rechenstufe 99 angeschlossene Leitung 123 in den Speicher 90a für den betreffenden ausgewählten Betriebspunkt 28 eingeschrieben wird (vgl. insbes. auch Figur 2).

Für den Fall, daß der instationäre Betriebszustand in einem nicht ausgewählten Betriebspunkt 31 der Brennkraftmaschine 29 auftritt, sind in der Steuereinheit 110a je eine Rechenstufe 92 bzw. 66 zur Ermittlung von Zwischenwerten $K_{ZW}$ und $t_{soll(ZW)}$ von Korrekturwert und Sollwert dieses nicht ausgewählten Betriebspunktes 31 vorgesehen (vgl. insbes. auch Figur 3).

Über die Leitungen 62 und 63 der Erkennungsstufe 59a werden die Koordinatensignale des nicht ausgewählten Betriebspunktes 31 auf entsprechende Eingänge der Rechenstufe 92 geschaltet. Über die Leitungen 101 und 102 des Speichers 90a werden die Korrekturwerte von zwei dem nicht ausgewählten Betriebspunkt 31 benachbarten ausgewählten Betriebspunkten 28 einschließlich derer Koordinatenwerte in die Rechenstufe 92 eingegeben, die aus diesen Daten einen dem nicht ausgewählten Betriebspunkt 31 zugehörigen Korrekturwert $K_{ZW}$ ermittelt, welcher über eine an den Ausgang der Rechenstufe 92 angeschlossene Leitung 122 und eine der Endstufen 96 auf den λ -Regler 33 geschaltet wird.

Um nach Beendigung eines solchen in einem nicht ausgewählten Betriebspunkt 31 ausgelösten instationären Betriebszuständes ggfls. eine Adaption der Kennfelder 133 vornehmen zu können, ist in der Steuereinheit 110a noch folgende mit der Anordnung der vorangehenden Ausführungsformen übereinstimmende Anordnung getroffen:

Auf Eingänge der Rechenstuft 66 werden über die Leitungen 62 und 63 der Erkennungsstufe 59a die Koordinatensignale des nicht ausgewählten Betriebspunktes 31 geschaltet. Über an Ausgänge des Speichers 91a angeschlossene Leitungen 103 und 104 werden die entsprechenden Signale von Sollwerten der beiden dem nicht ausgewählten Betriebspunkt 31 benachbarten ausgewählten Betriebspunkte 28 sowie deren Koordinatenwerte auf Eingänge der Rechenstufe 66 geschaltet. Aus diesen Eingangssignalen ermittelt die Rechenstufe 66 einen dem nicht ausgewählten Betriebspunkt 31 zugehörigen Sollwert $t_{soll(ZW)}$, der über ein entsprechendes Ausgangssignal durch eine Leitung 25 auf den einen Eingang einer Komparatorstufe 93 geschaltet wird, an deren anderem Eingang das Istwertsignal der Leitung 131 der Meßstufe 67a anliegt.

Die Komparatorstufe 93 liefert an ihrem Ausgang bei ein zulässiges Maß übersteigender Abweichung ein Signal, das dem Istwert der Zeitspanne 39 entspricht und über eine Leitung 124 auf einen Eingang einer Rechenstufe 97 zur Ermittlung eines dem nicht ausgewählten Betriebspunkt 31 zugehörigen neuen Korrekturwertes $K_{neu(ZW)}$ geschaltet wird (vgl. insbesondere auch Figur 4).

Über weitere Eingänge werden in die Rechenstufe 97 das Sollwertsignal der Leitung 25 der Rechenstufe 66 und das Korrekturwertsignal der Leitung 122 der Rechenstufe 92 eingegeben. Die Rechenstufe 97 liefert an ihrem Ausgang ein Signal, das dem aus den Eingangsdaten ermittelten neuen Korrekturwert $K_{neu(ZW)}$ des nicht ausgewählten Betriebspunktes 31 entspricht und durch eine Leitung 27 auf einen Eingang einer Übertragungsstufe 98 geschaltet wird. Diese Übertragungsstufe 98 ist in weiterer Übereinstimmung mit den vorhergehenden Ausführungsformen eingangsseitig an die Signalleitungen 62 und 63 der Erkennungsstufe 59a und an die Signalleitungen 101 und 102 des Speichers 90a sowie an die Signalleitung 122 der Rechenstufe 92 angeschlossen. Wie bei den vorangehenden Ausführungsbeispielen anhand der Figuren 1, 4 und 10 bereits erläutert ist, ermittelt die Übertragungsstufe 98 aus diesen Eingangsdaten für den dem nicht ausgewählten Betriebspunkt 31 am nächsten liegenden ausgewählten Betriebspunkt 28 einen neuen übertragenen Korrekturwert $K_{neu(ü)}$, welcher über eine Leitung 32 in den Speicher 90a eingeschrieben wird.

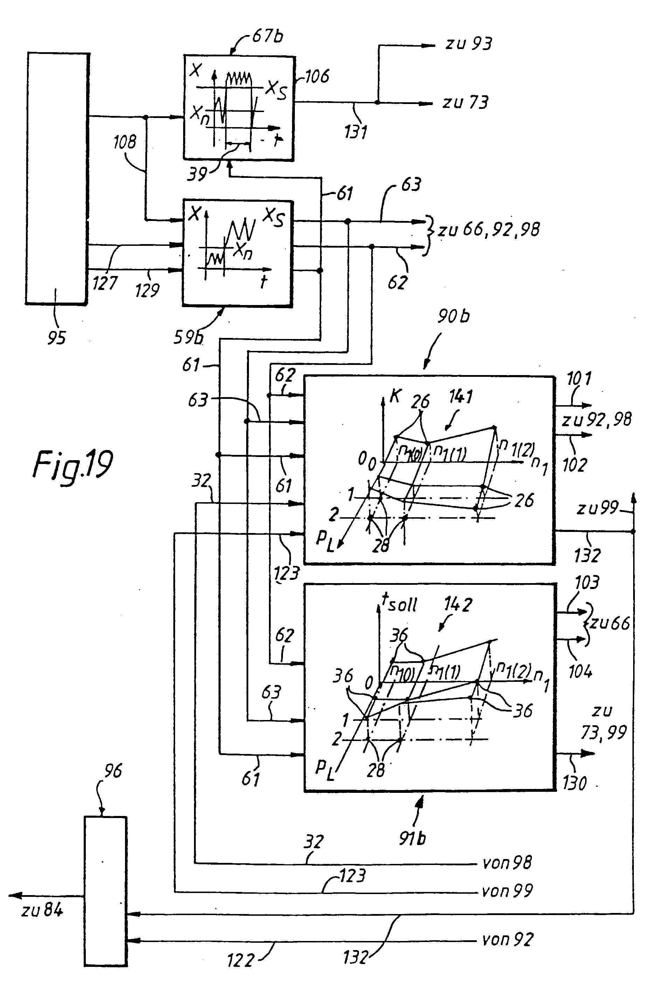

In den Figuren 18 und 19 ist die Anwendung des Verfahrens und der Anordnung nach der Erfindung auf eine Brennkraftmaschine 29 mit einem die Verbrennung in den Brennräumen beeinflussenden Regler 84 zur Vermeidung von anomaler Verbrennung, sogenannten Klopfens, schematisch dargestellt.

Der Regler 84 ist über eine Leitung 136 mit einem Signalgeber 135 verbunden, der einen von der Verbrennung in den Brennräumen abhängigen Parameter, bspw. die in den Brennräumen herrschenden Druck- und/oder Temperaturbedingungen, zu erfassen und ein einem solchen Parameterwert entsprechendes Ausgangssignal zu erzeugen vermag. Der Regler 84 ist weiterhin über eine Leitung 139 mit einem Drehzahlsensor 140 verbunden, welcher ein der jeweiligen Drehzahl $n_1$ entsprechendes Ausgangssignal liefert. Dieses Ausgangssignal verwendet der Regler 84 als Bezugssignal, das den Parameterwert bei optimaler Verbrennung in den Brennräumen darstellt, für einen Vergleich mit dem Ausgangssignal der Leitung 136 ggf. unter Meßgrößenumformung eines oder beider Signale. Der Regler 84 bildet, wenn das Ausgangssignal des Klopfsensors 135 Bedingungen mit anomal hohem Druck und/oder anomal hoher Temperatur entspricht, nach Maßgabe der Abweichung ein Korrektursignal zur Herabsetzung des Verbrennungsdruckes in den Brennräumen. Diese Herabsetzung des Verbrennungsdruckes in Abhängigkeit von dem Korrektursignal kann z. B. wie in der DE-PS 30 49 980 durch die Absenkung des Ansaug- oder des Ladedruckes der Brennkraftmaschine oder wie in der DE-OS 31 16 593 durch Verlagerung des Zündzeitpunktes erreicht werden. Der Regler 84 ist über eine weitere Leitung 65 mit einem Ausgang 126 einer elektronischen Steuereinheit 110b verbunden, welche Eingänge 56, 58 und 85 aufweist. Die Brennkraftmaschine 29 weist einen Signalgeber 137 auf, welcher ein dem Ansaug- oder Ladedruck der Brennkraftmaschine 29 entsprechendes Ausgangssignal abgibt, welches über eine Leitung 138 auf den Eingang 56 geschaltet ist. Dagegen ist der Eingang 58 mit der Drehzahlsignalleitung 139 verbunden, während der Eingang 85 an die Klopfsignalleitung 136 angeschlossen ist. Aus diesen Eingangsdaten liefert die Steuereinheit 110b an ihrem Ausgang 126 ein weiteres Korrektursignal, das über die Leitung 65 mit dem Korrektursignal des Reglers 84 in dem Sinne verknüpft wird, daß die Zeitspanne klopfender Verbrennung auf ein Minimum verkürzt oder Null wird.

Die Eingänge 56, 58 und 85 sind mit Signalaufbereitungsstufen 95 verbunden, während der Ausgang 126 von Endstufen 96 abgeht. Die Signalaufbereitungsstufen 95 sind durch eine Leitung 108 mit einer Meßstufe 67b sowie durch die Leitung 108 und durch weitere Leitungen 127 und 129 mit einer Erkennungsstufe 59b verbunden. Die Leitung 108 führt das Signal x des Klopfsensors 135, so daß die Meßstufe 67b die Zeitspanne 39 mißt, in der ein klopfende Verbrennung anzeigender Signalwert $x_S$ - welcher naturgemäß über dem normale bzw. optimale Verbrennung entsprechenden Signalwert $x_n$ liegt - auftritt. An dem an eine Leitung 131 angeschlossenen Ausgang der Meßstufe 67b erscheint nach dem Ende der klopfenden Verbrennung ein dem Istwert der Zeitspanne 39 entsprechendes Signal.

Die Leitung 127 führt ein der Drehzahl $n_1$ der Brennkraftmaschine 29 entsprechendes Signal, während die Leitung 129 ein dem Ansaug- oder Ladedruck der Brennkraftmaschine 29 entsprechendes Signal überträgt. Somit liefert die Erkennungsstufe 59b bei Auftreten des Klopfsignales $x_S$ über ihre ausgangsseitigen Leitungen 62 und 63 die Koordinatenwerte $n_{1(x)}$ und $p_{L(Z)}$ des betreffenden Betriebspunktes, in welchem sich die Brennkraftmaschine 29 hierbei befindet, sowie über ihre ausgangsseitige Leitung 61 ein Taktsignal, welches die Meßstufe 67b anstößt und auf Speicher 90b und 91b geschaltet ist, welche eingangsseitig ebenfalls noch mit den Leitungen 62 und 63 der Erkennungsstufe 59b verbunden sind.

In dem Speicher 90b sind Kennfelder 141 für die Zuordnung von Korrekturwerten 26 zu ausgewählten Betriebspunkten 28 der Brennkraftmaschine 29 gespeichert. In dem dreiachsigen Koordinatensystem des jeweiligen Kennfeldes 141 sind auf der x-Achse die Drehzahl $n_1$ der Brennkraftmaschine 29, auf der y-Achse die Korrekturwerte und auf der z-Achse der Ansaug- bzw. Ladedruck $p_L$ der Brennkraftmaschine 29, letzterer als Parameter der Drehmomentlast, aufgetragen. In dem Speicher 91b sind Kennfelder 142 für die Zuordnung von Sollwerten 36 zu den ausgewählten Betriebspunkten 28 der Brennkraftmaschine 29 abgespeichert. In dem jeweiligen dreiachsigen Koordinatensystem der Kennfelder 142 sind auf der x-Achse die Drehzahl $n_1$ der Brennkraftmaschine 29, auf der y-Achse die Sollwerte der Zeitspanne 39 und auf der z-Achse der Ansaug- bzw. Ladedruck $p_L$ der Brennkraftmaschine 29, letzterer als Parameter der Drehmomentlast aufgetragen.

Die ausgewählten Betriebspunkte 28 eines Kennfeldes 141 einerseits und die ausgewählten Betriebspunkte 28 eines Kennfeldes 142 andererseits stimmen in ihren Koordinatenwerten derart überein, daß jedem ausgewählten Betriebspunkt 28 sowohl ein Korrekturwert 26 als auch ein Sollwert 36 zugeordnet ist.

Die bisher beschriebenen Funktionsstufen der Steuereinheit 110b zur Ermittlung des Korrekturwertes 26 für den Fall, daß der instationäre Betriebszustand - d. h. in diesem Falle "klopfende Verbrennung" - in einem der ausgewählten Betriebspunkte 28 auftritt, entsprechen somit ebenfalls den korrespondierenden Funktionsstufen der Steuereinheit 110. Aber auch in den übrigen Funktionsstufen der entsprechen die Steuereinheiten 110 und 110b einander, so daß für entsprechende Funktionen gleiche Bezugszahlen verwendet sind und zur ergänzenden Erläuterung auf die vorangehende Beschreibung bezüglich der Figuren 1 bis 17 verwiesen werden kann.

Beim Auftreten von klopfender Verbrennung stößt die Erkennungsstufe 59b über ihre Leitung 61 den Speicher 90b an, welcher aufgrund der beiden Koordinatenwerte der Leitungen 62 und 63 den dem betreffenden ausgewählten Betriebspunkt 28 zugehörigen Korrekturwert 26 ausgibt, welcher über die ausgangsseitige Leitung 132 des Speichers 90b über eine der Endstufen 96 auf den Regler 84 geschaltet wird.

Für eine eventuelle Adaption des Kennfeldes 141 nach Ende des instationären Betriebszustandes erfolgt ein Vergleich in der mit ihrem einen Eingang an die Leitung 131 und mit ihrem anderen Eingang an die Leitung 130 des Speichers 91b angeschlossenen Komparatorstufe 73. Der Speicher 91b gibt aufgrund der eingegebenen Koordinatenwerte der Leitungen 62 und 63 über seine Leitung 130 den dem betreffenden ausgewählten Betriebspunkt 28 zugehörigen Sollwert 36 aus. Für den Fall, daß die Abweichung ein zulässiges Maß übersteigt, gibt die Komparatorstufe 73 ein dem Istwert der Zeitspanne 39 entsprechendes Ausgangssignal ab, welches über die Leitung 74 auf die Rechenstufe 99 geschaltet ist, die eingangsseitig noch mit der Leitung 130 des Speichers 91b und mit der Leitung 132 des Speichers 90b verbunden ist. Die Rechenstufe 99 ermittelt einen neuen Korrekturwert bspw. nach der Beziehung $K_{neu} = (t_{ist}/t_{neu}) \cdot K$. Der neue Korrekturwert wird über die Leitung 123 an der Stelle des betreffenden ausgewählten Betriebspunktes 28 des Kennfeldes 141 des Speichers 90b eingeschrieben.

Für den Fall, daß klopfende Verbrennung in einem nicht ausgewählten Betriebspunkt 31 der Brennkraftmaschine 29 auftritt, ist zur Ermittlung eines zugehörigen Korrekturwertes wiederum folgende Anordnung getroffen (vgl. auch Figur 3):

Die Rechenstufe 92 ermittelt aus den Korrektur- und Koordinatenwerten der angeschlossenen Leitungen 101 und 102 des Speichers 90b für die beiden dem nicht ausgewählten Betriebspunkt 31 benachbarten beiden ausgewählten Betriebspunkte 28 sowie aus den Koordinatenwerten der angeschlossenen Leitungen 62 und 63 für den nicht ausgewählten Betriebspunkt 31 einen Korrekturwert $26_{(ZW)}$ welcher über die ausgangsseitige Leitung 122 der Rechenstufe 92 und eine der Endstufen 96 auf den Regler 84 geschaltet wird.

Für den Fall, daß nach Ende des in einem nicht ausgewählten Betriebspunkt 31 aufgetretenen instationären Betriebszustandes ggfls. eine Adaption des betreffenden Kennfeldes 141 zu erfolgen hat, ist wiederum folgende Anordnung getroffen (vgl. auch Figur 4):

Die Rechenstufe 66 ermittelt aus den Sollwert- und Koordinatendaten der beiden dem nichtausgewählten Betriebspunkt 31 benachbarten ausgewählten Betriebspunkte 28 der angeschlossenen Leitungen 103 und 104 des Speichers 91b und aus den Koordinatendaten des nicht ausgewählten Betriebspunktes 31 der angeschlossenen Leitungen 62 und 63 der Erkennungsstufe 59b einen dem nicht ausgewählten Betriebspunkt 31 zugehörigen Sollwert $36_{(ZW)}$, welcher über die ausgangsseitige Leitung 25 der Rechenstufe 66 auf den einen Eingang der Komparatorstufe 93 geschaltet ist, die ein Ausgangssignal abgibt, wenn die Abweichung des Istwertes der angeschlossenen Leitung 131 ein zulässiges Maß übersteigt. Dieses dem Istwert entsprechende Ausgangssignal wird über die ausgangsseitige Leitung 124 der Komparatorstufe 93 auf die Rechenstufe 97 geschaltet, die über die weiteren angeschlossenen Leitungen 25 und 122 aus dem Istwert, dem Korrekturwert und dem Sollwert einen dem nicht ausgewählten Betriebspunkt 31 zugehörigen neuen Korrekturwert $K_{neu(ZW)}$ beispielsweise nach der Beziehung $K_{neu(ZW)} = (t_{ist}/t_{soll(ZW)}) \cdot K_{ZW}$ ermittelt, welcher über die ausgangsseitige Leitung 27 auf die Übertragungsstufe 98 geschaltet wird (vgl. auch Figur 10).

Die Übertragungsstufe 98 ermittelt aus den Koordinatenwerten der angeschlossenen Leitungen 101 und 102 für die beiden dem nicht ausgewählten Betriebspunkt 31 benachbarten ausgewählten Betriebspunkte $28_{(1)}$ und $28_{(2)}$ sowie anhand der Koordinatenwerte der noch angeschlossenen Leitungen 62 und 63 für den nicht ausgewählten Betriebspunkt 31 die Lagekoordinate 53 für den am nächsten liegenden ausgewählten Betriebspunkt $28_{(1)}$, in welchen ein neuer Korrekturwert $K_{neu(ü)} = 26_{neu(ü)}$ (Figur 10) zu übertragen ist.

Aus dem über die schließlich noch angeschlossene Leitung 122 anstehenden alten Korrekturwert $K_{ZW}$ für den nicht ausgewählten Betriebspunkt 31 ermittelt die Übertragungsstufe 98 eine Differenz 35 aus neuem und altem Korrekturwert $26_{neu(ZW)}$ und $26_{(ZW)}$.

Der zu übertragende neue Korrekturwert $26_{neu(ü)}$ unterscheidet sich von dem alten Korrekturwert $26_{(1)}$ des am nächsten liegenden ausgewählten Betriebspunktes $28_{(1)}$ um eine Differenz 34, welche etwa gleich der Differenz 35 ist.

Der zu übertragende neue Korrekturwert $26_{neu(ü)}$ wird über die ausgangsseitige Leitung 32 in den Speicher 90b an die Stelle des am nächsten liegenden ausgewählten Betriebspunktes $28_{(1)}$ des Kennfeldes 141 eingeschrieben.

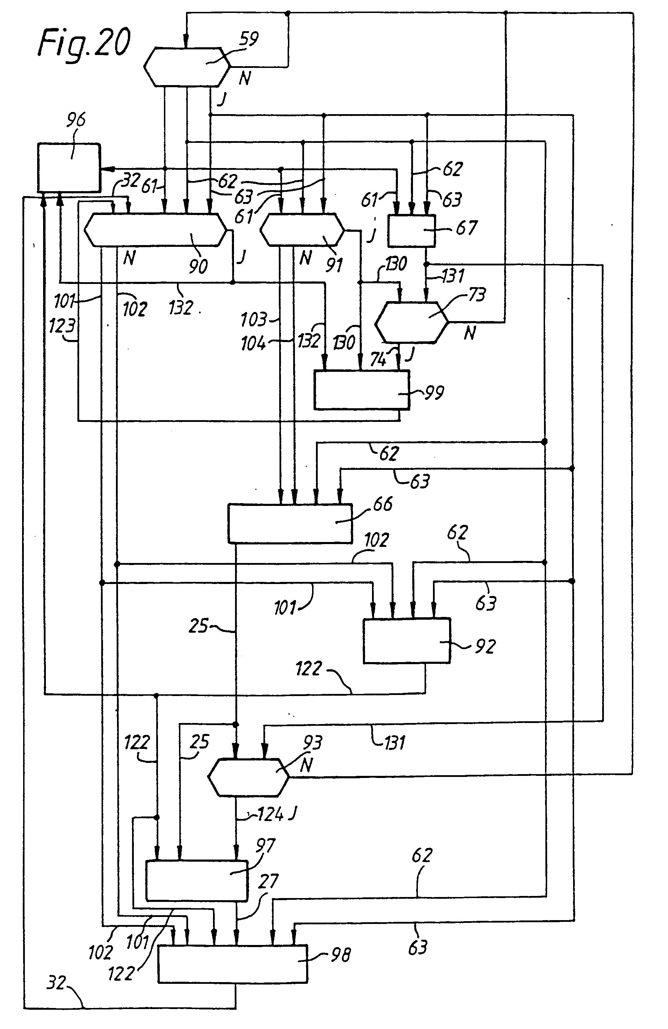

Signalflußplan Figur 20:

Wird eine in der Erkennungsstufe 59 abgelegte Schaltlinie überschritten, verläßt die Stufe den Wartezustand und gibt die Signale 61, 62, 63 aus. Das Gangschaltsignal 61 liegt an der Stufe 96, der Meßstufe 67 und den Speichern 90, 91 an. Die den Betriebszustand beschreibenden Signale 62, 63 sind verbunden mit der Meßstufe 67, den Speichern 90, 91, den Rechenstufen 66, 92 und der Übertragungsstufe 98.

Liegt der momentane Betriebspunkt auf einem in den Kennfeldern der Speicher 90, 91 abgespeicherten ausgewählten Betriebspunkt, dann werden von den Speichern 90, 91 folgende Signale ausgegeben:

Speicher 90 gibt den dem ausgewählten Betriebspunkt zugehörenden Korrekturwert über die Leitung 132 aus. Diese ist verbunden mit der Stufe 96 zur Ventilansteuerung und der Stufe 99.

Speicher 91 gibt den dem ausgewählten Betriebspunkt zugehörenden Sollwert über die Leitung 130 aus. Diese ist verbunden mit der Komparatorstufe 73 und der Rechenstufe 99. Die Komparatorstufe 73 vergleicht den Istwert 131 aus der Meßstufe 67, ebenfalls verbunden mit der Stufe 93, mit dem Sollwert 130.

Befindet sich der Istwert nicht außerhalb des Toleranzfensters, wird zur Erkennungsstufe 59 zurückgesprungen, eine Korrektur findet nicht statt.

Befindet sich der Istwert außerhalb des Toleranzfensters, wird das Signal 74 ausgegeben, mit dem in der Rechenstufe 99 mit den Signalen 132, 130 ein neuer Korrekturwert für den ausgewählten Betriebspunkt berechnet wird.

Dieser neue Korrekturwert wird über die Leitung 123, dem ausgewählten Betriebspunkt zugeordnet, in den Speicher 90 eingeschrieben.

Liegt der momentane Betriebspunkt nicht auf einem ausgewählten Betriebspunkt, werden der Korrekturwert und der Sollwert aus den den benachbarten Betriebspunkten zugeordneten Korrekturwerten bzw. Sollwerten in den Rechenstufen 92 bzw. 66 interpoliert. Die Leitungen 101 und 102 für die Korrekturwerte sind, ausgehend vom Speicher 90, mit den Stufen 92 und 98 verbunden. Die Leitungen 103 und 104 für die Sollwerte sind, ausgehend vom Speicher 91, mit der Stufe 66 verbunden.

Der in der Stufe 92 interpolierte Korrekturwert für den momentanen Betriebspunkt wird über die Leitung 122 der Stufe 96 und den Stufen 97 und 98 zugeführt.

Die Komparatorstufe 93 vergleicht den Sollwert 25 mit dem Istwert 131. Befindet sich der Istwert nicht außerhalb des Toleranzfensters, wird zur Erkennungsstufe 59 zurückgesprungen - eine Korrektur findet nicht statt.

Befindet sich der Istwert außerhalb des Toleranzfensters, wird das Signal 124 ausgegeben und in der Stufe 97 ein neuer Korrekturwert berechnet. Dieser wird über die Leitung 27 der Übertragungsstufe 98 zugeführt. Diese schreibt den neuen Korrekturwert über die Leitung 32 in den Speicher 90 ein.

**Patentansprüche**

1. Verfahren zur adaptiven Steuerung einer Betriebsgröße einer Antriebskomponente eines Kraftfahrzeuges - z.B. der Kraftstoffeinspritzmenge (Regler 33) oder des Ansaugdrucks (Regler 84) einer Brennkraftmaschine oder des Schaltdrucks (Druckregelventil 89) eines selbsttätig schaltenden Gangwechselgetriebes (121) - mit folgenden Schritten, wenn ein instationärer Betriebszustand der Antriebskomponente - z.B. Beschleunigung, klopfende Verbrennung, Gangwechsel - erkannt wird:

   (a1) Auslesen eines gespeicherten Korrekturwertes (26) für die Betriebsgröße aus einem Korrekturwert-Kennfeld (30 oder 133 oder 141), das über ausgewählten und von der Drehzahl und der Last der Brennkraftmaschine abhängigen Betriebspunkten (28) aufgespannt ist, entsprechend dem vorliegenden Betriebspunkt,

   (a2) Verwenden des ausgelesenen gespeicherten Korrekturwertes (26) zur Bestimmung der Betriebsgrößen für den momentanen instationären Betriebszustand,

   (b) Auslesen eines Sollwertes (36) für eine kritische Zeitspanne (39) hinsichtlich eines optimalen Betriebsverhaltens der Antriebskomponente beim Auftreten eines insationären Betriebszustandes aus einem Soll-Wert-Kennfeld (94 oder 134 oder 142), das über ausgewählten und von der Drehzahl und der Last der Brennkraftmaschine abhängigen Betriebspunkten (28) aufgespannt ist, entsprechend dem vorliegenden Betriebspunkt,

   (c) Bestimmen eines Ist-Wertes (68) für die kritische Zeitspanne (39),

   (d) Vergleichen (Komparatorstufe 73) des ausgelesenen Soll-Wertes (36) mit dem Ist-Wert (68),

   (e) Errechnen (Rechenstufe 99) eines neuen Korrekturwertes ($K_{neu}$) für die Betriebsgröße im Sinne einer Verminderung der Soll-Ist-Abweichung unter Berücksichtigung des ausgelesenen gespeicherten Korrekturwertes (26) und des Ergebnisses des Soll-Ist-Vergleiches,

   (f) Einschreiben des errechneten neuen Korrekturwertes ($K_{neu}$) in das Korrekturwert-Kennfeld (30 oder 133 oder 141) entsprechend dem vorliegenden Betriebspunkt,

   (g) Verwenden des errechneten neuen Korrekturwertes ($K_{neu}$) bei der Bestimmung der Betriebsgröße, wenn ein nachfolgender instationärer Betriebszustand erkannt wird,

**gekennzeichnet durch** folgende Schritte:

   (h1) Ermitteln des auszulesenden Korrekturwertes ($K_{zw}$) durch Interpolieren von aus benachbarten ausgewählten Betriebspunkten ($28_{(1)}$ und $28_{(2)}$) des zugeordneten Kennfelds (30 oder 133 oder 141) ausgelesenen Werten ($26_{(1)}$; $26_{(2)}$), wenn der vorliegende Betriebspunkt (31) nicht einem ausgewählten Betriebspunkt (28) des zugeordneten Kennfeldes entspricht,

   (h2) Verwenden des gemäß Verfahrensschritt (h1) durch Interpolieren ermittelten Korrekturwertes ($K_{zw}$) zur Bestimmung der Betriebsgröße für den momentanen instationären Betriebszustand,

   (h3) Ermitteln des auszulesenden Soll-Wertes ($t_{soll(zw)}$) durch Interpolieren von aus benachbarten ausgewählten Betriebspunkten ($28_{(1)}$; $28_{(2)}$) des zugeordneten Kennfeldes (94 oder 134 oder 142) ausgelesenen Werten ($36_{(1)}$; $36_{(2)}$), wenn der vorliegende Betriebspunkt (31) nicht einem ausgewählten Betriebspunkt (28) des zugeordneten Kennfeldes entspricht,

   (i) Errechnen des neuen Korrekturwertes ($K_{neu(zw)}$) gemäß Verfahrensschritt (e) für den vorliegenden Betriebspunkt (31) unter Verwendung des interpolierten Korrekturwertes ($K_{zw}$),

   (j) Umrechnen des errechneten neuen Korrekturwertes ($K_{neu(zw)}$) auf einen übertragenen Korrekturwert ($K_{neu(ü)}$) für einen dem vorliegenden Betriebspunkt (31) benachbarten ausgewählten Betriebspunkt ($28_{(1)}$ oder $28_{(2)}$) unter Berücksichtigung der Lagekoordinaten (53 oder 54) des vorliegenden Betriebspunktes (31) und des benachbarten ausgewählten Betriebspunktes,

   (k1) Einschreiben des umgerechneten übertragenen Korrekturwertes ($K_{neu(ü)}$) als neuer Korrekturwert in das Korrekturwert-Kennfeld (30 oder 133 oder 141) an der Stelle des benachbarten ausgewählten Betriebspunktes ($28_{(1)}$ oder $28_{(2)}$),

   (k2) Verwenden des eingeschriebenen übertragenen neuen Korrekturwertes ($K_{neu(ü)}$) zur Bestimmung der Betriebsgröße, wenn ein nachfolgender instationärer Betriebszustand erkannt wird,

(l) Unterteilen der kritischen Zeitspanne (39) in zwei oder mehr Phasen (40 und 41 oder 42 bis 44),

(m) Verwenden je eines eigenen Sollwert-Kennfeldes und eines eigenen Korrekturwert-Kennfeldes, die über ausgewählten und von der Drehzahl und der Last der Brennkraftmaschine abhängigen Betriebspunkten aufgespannt sind, für jede Phase der kritischen Zeitspanne,

(n) Ausführen der vorstehenden Verfahrensschritte (a1) bis (k2) unter Benutzung der der jeweiligen Phase zugeordneten Kennfelder.

2. Verfahren nach Anspruch 1,
**dadurch gekennzeichnet,**
daß bei der Ausführung der Verfahrensschritte (j) und (k1) und (k2) als benachbarter ausgewählter Betriebspunkt ausschließlich der dem vorliegenden Betriebspunkt (31) am nächsten liegende ausgewählte Betriebspunkt ($28_{(1)}$) verwendet wird.

3. Verfahren nach Anspruch 1 oder 2,
**dadurch gekennzeichnet,**
daß bei der Umrechnung gemäß Verfahrensschritt (j) die Differenz (35) aus dem gemäß Verfahrensschritt (h1) ermittelten interpolierten Korrekturwert ($K_{zw}$) und dem gemäß Verfahrensschritt (i) errechneten neuen Korrekturwert ($K_{neu(zw)}$) zu dem im Korrekturwert-Kennfeld (30 oder 133 oder 141) gespeicherten alten Korrekturwert ($26_{(1)}$) des benachbarten ausgewählten Betriebspunktes ($28_{(1)}$) addiert wird.

4. Anordnung zur Durchführung eines Verfahrens nach einem der Ansprüche 1 bis 3, mit einer Meßstufe (67 oder 67a oder 67b) zur Ermittlung des Ist-Wertes der Zeitspanne gemäß Verfahrensschritt (c), mit einem Stellglied (Druckregelventil 89 oder Regler 33 oder Regler 84) zur Bestimmung der Betriebsgröße gemäß den Verfahrensschritten (a2), (g), (h2) und (k2), mit einer Speicherzelle (48) für Korrekturwerte und Speicherzellen (49) für Soll-Werte enthaltenden Speicheranordnung (90, 91 oder 90a, 91a, oder 90b, 91b) zum Ablegen von gemäß Verfahrensschritt (n) benutzten Kennfeldern (30, 94 oder 133, 134 oder 141, 142) sowie mit einer auf Eingänge der Speicheranordnung geschalteten Erkennungsstufe (59 oder 59a oder 59b) für den instationären Betriebszustand,
**dadurch gekennzeichnet,**
daß eine Rechenstufe (66) zur Ermittlung der nicht ausgewählten Betriebspunkten (31) zugeordneten Soll-Werte ($t_{soll(zw)}$) gemäß Verfahrensschritt (h3) und eine Rechenstufe (92) zur Ermittlung der nicht ausgewählten Betriebspunkten (31) zugeordneten Korrekturwerte ($K_{zw}$) gemäß Verfahrensschritt (h1) sowie eine Komparatorstufe (93) für einen Vergleich der Ist-Werte ($t_{ist}$) mit den nicht ausgewählten Betriebspunkten (31) zugeordneten Soll-Werten ($t_{soll(zw)}$) gemäß Verfahrensschritt (i) vorgesehen sind, daß die beiden Rechenstufen (96 und 92) sowohl mit der Erkennungsstufe (59 oder 59a oder 59b) als auch mit der Speicheranordnung (90, 91 oder 90a, 91a oder 90b, 91b) und die Komparatorstufe (93) sowohl mit der Meßstufe (67 oder 67a oder 67b) als auch mit der Rechenstufe (66) für nicht ausgewählten Betriebspunkten (31) zugeordnete Soll-Werte ($t_{soll(zw)}$) jeweils eingangsseitig verbunden sind, und daß die Rechenstufe (92) für nicht ausgewählten Betriespunkten (31) zugeordnete Korrekturwerte ($K_{zw}$) ausgangsseitig mit dem Stellglied (Druckregelventil 89 oder Regler 33 oder Regler 84) zumindest mittelbar verbunden ist (Fig. 3), daß Meßstufe (67 bzw. 67a bzw. 67b) und Speicheranordnung (90, 91 bzw. 90a, 91a bzw. 90b, 91b) mit den Eingängen einer Komparatorstufe (73) für den Vergleich der Ist-Werte ($t_{ist}$) mit den ausgewählten Betriebspunkten (28) zugehörigen Soll-Werten ($t_{soll}$) gemäß Verfahrensschritt (d) verbunden sind sowie Komparatorstufe (73) und Speicheranordnung (90, 91 bzw. 90a, 91a bzw. 90b; 91b) mit einer Rechenstufe (99) zur Ermittlung des neuen Korrekturwertes ($K_{neu}$) nach einem in einem ausgewählten Betriebspunkt (28) aufgetretenen instationären Betriebszustand gemäß Verfahrensschritt (e) verbunden sind, während der Ausgang der Rechenstufe (99) mit der Speicheranordnung (90, 91 bzw. 90a, 91a bzw. 90b, 91b) gemäß Verfahrensschritt (f) verbunden ist, daß eine Rechenstufe (97) zur Ermittlung von nicht ausgewählten Betriebspunkten (31) zugeordneten neuen Korrekturwerten ($K_{neu(zw)}$) gemäß Verfahrensschritt (i) und eine Übertragungsstufe (98) zur Ermittlung von benachbarten ausgewählten Betriebspunkten (28) zugeordneten neuen übertragenen Korrekturwerten ($K_{neu(ü)}$) gemäß Verfahrensschritt (j) vorgesehen sind, daß die Rechenstufe (97) für die nicht ausgewählten Betriebspunkten (31) zugeordneten neuen Korrekturwerte ($K_{neu(zw)}$) eingangsseitig mit der Komparatorstufe (93) für den Sollwerte ($t_{soll(zw)}$) von nicht ausgewählten Betriebspunkten (31) verwendeten Vergleich gemäß Verfahrensschritt (i) und mit der Rechenstufe (92) für nicht ausgewählten Betriebspunkten (31) zugeordnete Korrekturwerte ($K_{zw}$) gemäß Verfahrensschritt (h1) sowie mit der Rechenstufe (66) für nicht ausgewählten Betriebspunkten (31) zugeordnete Sollwerte ($t_{soll(zw)}$) gemäß Verfahrensschritt (h3) verbunden ist und daß die Übertragungsstufe (98) eingangsseitig mit der Erkennungsstufe (59 bzw. 59a bzw. 59b) und mit der Rechenstufe (97) für nicht ausgewählten Betriebspunkten (31) zugeordnete neue Korrekturwerte ($K_{neu(zw)}$)sowie mit Ausgängen der Speicheranordnung (90, 91 bzw. 90a, 91a bzw. 90b, 91b) und der Rechenstufe (92) zur Ermittlung der nicht ausgewählten Betriebspunkten (31) zugehörigen Korrekturwerte ($K_{zw}$) - dagegen ausgangsseitig mit einem Eingang der Speicheranordnung (90 91 bzw. 90a, 91a bzw. 90b, 91b) gemäß Verfahrensschritt (k1) verbunden ist (Fig. 4).

5. Anordnung nach Anspruch 4,
**dadurch gekennzeichnet,**
daß in einem zur Belegung der Speicheranordnung (90, 91 oder 90a, 91a oder 90b, 91b) zum Ablegen von gemäß Verfahrensschritt (n) benutzten Kennfeldern verwendeten Speicherwort (47) mit n Speicherzellen ((1) bis (8)) (n-a) Speicherzellen (48) für die Einschreibung eines Korrekturwertes (K) und a Speicherzellen (49) für die Einschreibung eines Sollwertes ($t_{soll}$) verwendet sowie Korrekturwert (K) und Sollwert ($t_{soll}$) eines Speicherwortes (47) ein- und demselben ausgewählten Betriebspunkt (28) zugeordnet sind.

6. Anordnung nach Anspruch 5,
**dadurch gekennzeichnet,**
daß die Anzahl n = 8 und die Anzahl a = 2 ist.

7. Anordnung nach einem der Ansprüche 4 bis 6,
**dadurch gekennzeichnet,**
daß die Anzahl p der ausgewählten Betriebspunkte (28) bei den gemäß Verfahrensschritt (n) benutzten Kennfeldern jeweils kleiner als 20 ist.

8. Anordnung nach Anspruch 7,
**dadurch gekennzeichnet,**
daß die Anzahl p = 9 ist.

9. Anordnung nach einem der Ansprüche 4 bis 8,
**dadurch gekennzeichnet,**
daß als Antriebskomponente ein Gangwechselgetriebe (21); als Zeitspanne die zwischen Beginn (69) und Ende (70) einer Gangumschaltung liegende Schaltzeit (Δt) und als Betriebsgröße ein Steuerdruck (Druckregelventil 89) verwendet sind und der Steuerdruck in an sich bekannter Weise den Schaltdruck zur Beaufschlagung von Schaltstellgliedern zur Betätigung von Reibelementen (Kupplungen 111, 112 und Bremsen 52, 113, 114) einer selbsttätigen Schaltvorrichtung (20) des Gangwechselgetriebes (21) beeinflußt.

10. Anordnung nach Anspruch 9,
**dadurch gekennzeichnet,**
daß die Schaltzeit (Δt) durch Erfassung der Änderung der Getriebeübersetzung ($n_1/n_2$) ermittelt wird.

11. Anordnung nach Anspruch 9,
**dadurch gekennzeichnet,**
daß die zugehörige Schaltteilzeit ($\Delta t_2$) in wenigstens einer Phase (41) unmittelbar sowie in wenigstens einer weiteren Phase (40) durch Erfassung der Änderung der Getriebeübersetzung ($n_1/n_2$) ermittelt wird.

12. Anordnung nach einem der Ansprüche 4 bis 10,
**dadurch gekennzeichnet,**
daß eine Unterteilung in insgesamt drei Phasen (42 bis 44) vorgenommen ist und die zugehörige Schaltteilzeit ($\Delta t_1$ bzw.$\Delta t_2$ bzw. $\Delta t_3$) für jede Phase durch Erfassung der Änderung der Getriebeübersetzung ($n_1/n_2$) ermittelt wird.

13. Anordnung nach einem der Ansprüche 4 bis 12,
**dadurch gekennzeichnet,**
daß die Drehzahl eines mit der Getriebeeingangswelle (50) mittelbar verbundenen Getriebegliedes (51) zur Ermittlung der Getriebeeingangsdrehzahl ($n_1$) gemessen wird.

14. Anordnung nach Anspruch 13,
**dadurch gekennzeichnet,**
daß das Getriebeglied (51) mit einer Gangbremse (52) verbunden ist.

15. Anordnung nach einem der Ansprüche 4 bis 8,
**dadurch gekennzeichnet,**
daß als Antriebskomponente eine Brennkraftmaschine (29) mit einem Abgaskatalysator (72) und mit einer vor dem Abgaskatalysator (72) liegenden und mit einem Regler (33) zur Optimierung des Kraftstoff-Luft-Verhältnisses verbundenen λ-Sonde (Regelsonde 37) sowie mit einer nach dem Abgaskatalysator (72) liegenden λ-Sonde (Prüfsonde 38) verwendet ist und die Meßstufe (67a) diejenige Zeitspanne (39) gemäß Verfahrensschritt (c) mißt, in welcher die Prüfsonde (38) ein inkorrektes Kraftstoff-Luft-Verhältnisanzeigt, und daß sowohl die Speicheranordnung (90a, 91a) als auch die Rechenstufe (92) zur Ermittlung der den nicht ausgewählten Betriebspunkten (31) zugehörigen Korrekturwerte (26$_{zw}$) gemäß Verfahrensschritt (h1) jeweils ausgangsseitig zumindest mittelbar mit dem Regler (33) verbunden sind.

16. Anordnung nach Anspruch 15,
**dadurch gekennzeichnet,**
daß die Erkennungsstufe (59a) auf den Ausschlag (b$_s$) einer im Ansaugleitungssystem (80) der Brennkraftmaschine (29) angeordneten Stauscheibe (23) bei gleichbleibender Drehzahl (n$_1$) der Brennkraftmaschine (29) anspricht.

17. Anordnung nach einem der Ansprüche 4 bis 8,
**dadurch gekennzeichnet,**
daß als Antriebskomponente eine Brennkraftmaschine (29) mit einer die Verbrennung beeinflussenden Regelvorrichtung (84) zur Vermeidung klopfender Verbrennung verwendet ist, in der ein Vergleich zwischen einem den Parameterwert für optimale Verbrennung darstellenden Bezugssignal (n$_1$) mit einem von der Verbrennung, bspw. von den in den Brennräumen herrschenden Druck- und/oder Temperaturbedingungen abhängigen Ausgangssignal (x$_s$) erfolgt und bei insbesondere im Sinne anomal hohen Druckes und/oder anomal hoher Temperatur in den Brennräumen auftretenden Abweichungen des von der Verbrennung abhängigen Ausgangssignals (x$_s$) eine den Druck in den Brennräumen bestimmende Steuergröße beeinflußt wird, und daß die Meßstufe (67b) diejenige Zeitspanne (39) gemäß Verfahrensschritt (c) mißt, in welcher Abweichungen des von der Verbrennung abhängigen Ausgangssignals (x$_s$) auftreten und sowohl die Speicheranordnung (90b/91b) als auch die Rechenstufe (92) zur Ermittlung der den nicht ausgewählten Betriebspunkten (31) zugehörigen Korrekturwerte (26$_{zw}$) gemäß Verfahrensschritt (h1) jeweils ausgangsseitig zumindest mittelbar mit der Regelvorrichtung (84) zur Vermeidung klopfender Verbrennung verbunden ist.

18. Anordnung nach Anspruch 17,
**dadurch gekennzeichnet,**
daß die Erkennungsstufe (59b) auf das Auftreten von im Sinne anomal hohen Druckes und/oder anomal hoher Temperatur gerichteten Abweichungen des von der Verbrennung abhängigen Ausgangsignals (x$_s$) anspricht.

19. Anordnung nach Anspruch 17 oder 18,
**dadurch gekennzeichnet,**
daß der Ansaug- oder Ladedruck der Brennkraftmaschine (29) als den Druck in den Brennräumen bestimmende Steuergröße verwendet ist.

**Claims**

1. A process for the adaptive control of an operating value for a vehicle drive component - e.g. the fuel injection volume (regulator 33) or the intake pressure (regulator 84) of an internal combustion engine or the shift pressure (pressure regulation valve 89) of an automatic gearbox (121) - consisting of the following steps if a non-stationary drive component condition - e.g. acceleration, knocking, gear change - is recognised:

   (a1) Reading of a stored correction value (26) for the operating value from a correction value characteristic field (30 or 133 or 141) based on selected, internal combustion engine speed- and load-related operating points (28) in accordance with the existing operating point,

   (a2) Use of the read stored correction value (26) to determine the operating value for the momentary non-stationary operating condition,

   (b) Reading of a reference value (36) for a critical period (39) in respect of the optimum operating performance of the drive component in the event of a non-stationary operating condition from a reference value characteristic field (94 or 134 or 142) based on selected, internal combustion engine speed- and load-related operating points (28) in accordance with the existing operating point,

   (c) Determination of an actual value for the critical period (39),

   (d) Comparison (comparator stage 73) of the read reference value (36) with the actual value (68),

   (e) Calculation (computation stage 99) of a new correction value (K$_{new}$) for the operating value i.e. a reduction in the reference/actual deviance taking into account the read stored correction value (26) and the result of the comparison of the reference and actual values,

   (f) Entry of the calculated new correction value (K$_{new}$) in the correction value characteristic field (30 or 133 or 141) in accordance with the existing operating point,

   (g) Use of the calculated new correction value (K$_{new}$) in the determination the operating value if a subsequent non-stationary operating condition is recognised,

   **characterised by** the following steps:

   (h1) Calculation of the correction value to be read (K$_{zw}$) by interpolating values (26$_{(1)}$; 26$_{(2)}$) read from adjacent selected operating points (28$_{(1)}$ and 28$_{(2)}$) in the allocated char-

acteristic field (30 or 133 or 141) if the existing operating point (31) does not correspond to a selected operating point (28) in the allocated characteristic field,

(h2) Use of the correction value ($K_{zw}$) calculated by interpolation in accordance with step (h1) for the momentary non-stationary operating condition,

(h3) Calculation of the reference value to be read ($t_{ref(zw)}$) by interpolation of values ($36_{(1)}$; $36_{(2)}$) read from adjacent selected operating points ($28_{(1)}$; $28_{(2)}$) in the allocated characteristic field (94 or 134 or 142) if the existing operating point (31) does not correspond to a selected operating point (28) in the allocated characteristic field,

(i) Calculation of the new correction value ($K_{new(zw)}$) in accordance with step (e) for the existing operating point (31) using the interpolated correction value ($K_{zw}$),

(j) Conversion of the calculated new correction value ($K_{new(zw)}$) into transmitted correction value ($K_{new(T)}$) for a selected operating point ($28_{(1)}$ or $28_{(2)}$) adjacent to the existing operating point taking into account the positional coordinates (53 or 54) of the existing operating point and the adjacent selected operating point,

(k1) Entry of the converted transmitted correction value ($K_{new(T)}$) as the new correction value in the correction value characteristic field (30 or 113 or 141) in place of the adjacent selected operating point ($28_{(1)}$ or $28_{(2)}$), (k2) Use of the entered transmitted new correction value ($K_{new(T)}$) to determine the operating value if a subsequent non-stationary operating condition is recognised,

(l) Division of the critical period (39) into two or more phases (40 and 41 or 42 to 44),

(m) Use of one reference value characteristic field and one correction value characteristic field based on selected and internal combustion engine speed- and load-related operating points for each phase of the critical period,

(n) Completion of the above steps (a1) to (k2) using the characteristic fields allocated to the various phases.

2. A process as per claim 1,
**characterised in that**,
during the performance of steps (j) and (k1) and (k2) only the selected operating point ($28_{(1)}$) next to the existing operating point (31) is used as the adjacent selected operating point.

3. A process as per claim 1 or 2,
**characterised in that**,
when carrying out the conversion in accordance with step (j) the difference (35) between the calculated interpolated correction value ($K_{zw}$) calculated in accordance with step (h1) and the new correction value ($K_{new(zw)}$) calculated in accordance with step (i) is added to the old correction value ($26_{(1)}$) for the adjacent selected operating point ($28_{(1)}$) stored in the correction value characteristic field (30 or 133 or 141).

4. An arrangement for the performance of a process as per one of claims 1 to 3, with a measuring stage (67 or 67a or 67b) for the calculation of the actual value of the period in accordance with step (c), with an actuator (pressure regulation valve 89 or regulator 33 or regulator 84) to determine the operating value in accordance with steps (a2), (g), (h2) and (k2), with a memory location (48) for correction values and memory locations (49) for the memory arrangement (90, 91 or 90a, 91a or 90b, 91b) containing reference values for the storage of characteristic fields (30, 94 or 133, 134 or 141, 142) used in accordance with step (n) and with a recognition stage connected to the memory arrangement inputs (59 or 59a or 59b) for the non-stationary operating condition,
**characterised in that**,
a computation stage (66) for the calculation of reference values ($t_{ref(zw)}$) not allocated to selected operating points (31) in accordance with step (h3) and a computation stage (92) for the calculation of correction values ($K_{zw}$) not allocated to selected operating points (31) in accordance with step (h1) and a comparator stage (93) for the comparison of the actual value ($t_{act}$) and the references values ($t_{ref(zw)}$) not allocated to selected operating points (31) in accordance with step (i) are provided, that the two computation stages (96 and 92) are connected on the input side to both the recognition stage (59 or 59a or 59b) and to the memory arrangement (90, 91 or 90a, 91a or 90b, 91b) and the comparator stage (93) is connected on the input side to both the measuring stage (67 or 67a or 67b) and the computation stage (66) for reference values ($t_{ref(zw)}$) not allocated to selected operating points (31), and that the computation stage (92) for correction values ($K_{zw}$) not allocated to selected operating points (31) is connected at least indirectly on the output side to the actuator (pressure regulation valve 89 or regulator 33 or regulator 84) (Fig. 3), that the measuring stage (67 / 67a / 67b) and the memory arrangement (90, 91 / 90a, 91a / 90b, 91b) are connected to the inputs of a comparator stage (73) for the comparison of actual values ($t_{act}$) with the reference values ($t_{ref}$) for the selected operating points (28) in accordance with step (d) and the comparator stage (73) and memory arrangement (90, 91 / 90a, 91a / 90b, 91b) are connected to a computation stage (99) for the calculation of the new correction value ($K_{new}$) after a non-stationary operating condition at a selected operating point (28) in accordance with step (e) whilst the computation stage (99) output is connected to the memory arrangement (90, 91 / 90a, 91a / 90b, 91b) in accordance with step (f), that a computation stage (97) for the calculation of new correction values ($K_{new(zw)}$) not allocated to selected operating points (31) in accordance with step (i) and a transmission stage (98) for the calculation of new transmitted correction values ($K_{new(T)}$) allocated to adjacent selected operating points (28) in accordance with step (j) are provided, that the computation stage (97) for new correction values ($K_{new(zw)}$) not allocated to selected operating points (31) is connected on the input side to the comparator stage (93) for the comparison used for reference values ($t_{ref(zw)}$) of non-selected operating points (31) in accordance with step (i) and to the computation stage (92) for correction values ($k_{zw}$) not allocated to selected operating points (31) in accordance with step (h1) and to computation stage (66) for reference values ($t_{ref(zw)}$) not allocated to selected operating points (31) in accordance with step (h3) and that the transmission stage (98) is connected on the input side to the recognition stage (59 / 59a / 59b) and to the computation stage (97) for new correction values ($K_{new(zw)}$) not allocated to selected operating points (31) and to outputs from the memory arrangement (90, 91 / 90a, 91a / 90b, 91b) and the computation stage (92) for the calculation of correction values ($K_{zw}$) not allocated to selected operating points (31) - but connected on the output side to a memory arrangement (90, 91 / 90a, 91a / 90b, 91b) input in accordance with step (k1) (Fig. 4).

5. An arrangement as per claim 4,
   **characterised in that**,
   in a memory word (47) with n memory locations ((1) to (8)) used to occupy the memory arrangement (90, 91 / 90a, 91a / 90b, 91b) for the storage of the characteristic fields used in accordance with step (n), (n-a) memory locations (48) are used to record a correction value (K) and a memory locations (49) are used to record a reference value ($t_{ref}$) and correction value (K) and reference value ($t_{ref}$) of a memory word (47) are allocated to one and the same selected operating point (28).

6. An arrangement as per claim 5,
   **characterised in that**,
   the number n = 8 and the number a = 2.

7. An arrangement as per one of claims 4 to 6,
   **characterised in that**,
   the number p of selected operating points (28) is less than 20 for the characteristic fields used in accordance with step (n).

8. An arrangement as per claim 7,
   **characterised in that**,
   the number p = 9.

9. An arrangement as per one of claims 4 to 8,
   **characterised in that**,
   a gearbox (21) is used as the drive component, the shift time ($\Delta t$) between the start (69) and the end (70) of a gear change is used as the time and a control pressure (pressure regulation valve 89) is used as the operating value and that the control pressure exerts a known influence on the shift pressure which activates actuators which operate friction elements (clutches 111, 112 and brakes 52, 113, 114) in an automatic shift device (20) in the gearbox (21).

10. An arrangement as per claim 9,
    **characterised in that**,
    the shift time ($\Delta t$) is calculated by measuring the change in gear ratio ($n_1/n_2$).

11. An arrangement as per claim 9,
    **characterised in that**,
    the relevant shift time fraction ($\Delta t_2$) is calculated directly in at least one phase (41) and by measuring the change in gear ratio ($n_1/n_2$) in at least one other phase (40).

12. An arrangement as per one of claims 4 to 10,
    **characterised in that**,
    the process is split into a total of three phases (42 to 44) and the relevant shift time fraction ($\Delta t_1$ / $\Delta t_2$ / $\Delta t_3$) is calculated for each phase by measuring the change in gear ratio ($n_1/n_2$).

13. An arrangement as per one of claims 4 to 12,
    **characterised in that**,
    the speed of a gear element (51) indirectly connected to the clutch shaft (50) is measured in order to calculate the clutch speed.

**14.** An arrangement as per claim 13, **characterised in that**, the gear element (51) is connected to a gear brake.

**15.** An arrangement as per one of claims 4 to 8, **characterised in that**, an internal combustion engine (29) with a catalytic convertor (72) and with an oxygen sensor (regulating sensor 37) located upstream of the catalytic convertor (72) and connected to a regulator (33) to optimise the fuel/air ratio and with an oxygen sensor (test sensor 38) located downstream of the catalytic convertor (72) is used as the drive component and that in accordance with step (c) the measuring stage (67a) measures the period (39) for which the test sensor (38) indicates an incorrect fuel/air ratio and that both the memory arrangement (90a, 91a) and the computation stage (92) for the calculation of correction values ($26_{zw}$) not allocated to selected operating points (31) are connected at least indirectly on the output side to the regulator (33) in accordance with step (h1).

**16.** An arrangement as per claim 15, **characterised in that**, at constant engine speed ($n_1$) the recognition stage (59a) reacts to the deflection ($b_s$) of a diaphragm (23) positioned in the induction system (80) of the internal combustion engine (29).

**17.** An arrangement as per one of claims 4 to 8, **characterised in that**, an internal combustion engine (29) with a controller (84) which influences combustion to prevent knocking is used as the drive component and in which a comparison is made between a reference signal ($n_1$) representing the parameter value for optimum combustion and an output signal ($x_s$) determined by combustion, for example by the ambient pressure and/or temperature conditions in the combustion chambers, and where deviances in the combustion-determined output signal ($x_s$), notably anomalously high pressures and/ or temperatures in the combustion chambers, influence a control value which determines pressure in the combustion chambers, and that in accordance with step (c) measuring stage (67b) measures the time (39) in which deviances in the combustion -determined output signal ($x_s$) occur and both the memory arrangement (90b/91b) and the computation stage (92) for the calculation of the correction values ($26_{zw}$) not allocated to selected operating points (31) in accordance with step (h1) are connected on the output side at least indirectly with the controller (84) to prevent knocking.

**18.** An arrangement as per claim 17, **characterised in that**, the recognition stage (59b) reacts to the occurrence of deviances such as anomalously high pressure and/or temperatures in the combustion-determined output signal ($x_s$).

**19.** An arrangement as per claim 17 or 18, **characterised in that**, the intake or boost pressure of the internal combustion engine (29) is used as the control value to determine the pressure in the combustion chambers.

## Revendications

**1.** Procédé de commande adaptative pour une grandeur de fonctionnement d'un élément de propulsion d'un véhicule automobile - par exemple le débit injecté de carburant (régulateur 33) ou de la pression d'aspiration (régulateur 34) d'un moteur à combustion interne ou de la pression de commutation (soupape de régulation de pression 89) d'une boîte de vitesses (121) à changement automatique - avec les étapes suivantes, lorsqu'un état de fonctionnement instationnaire des éléments de propulsion - par exemple accélération, combustion avec cognement, changement de vitesse - est identifié :

(a1) Lecture d'une valeur de correction (26) stockée en mémoire, pour la grandeur de fonctionnement, à partir d'un champ de caractéristiques de valeurs de correction (30 ou 133 ou 141) couvert par des points de fonctionnement (28) sélectionnés et dépendant de la vitesse de rotation et de la charge du moteur à combustion interne, en fonction du point de fonctionnement actuel,

(a2) utilisation de la valeur de correction (26) stockée et lue, pour la détermination de la grandeur de fonctionnement de l'état de fonctionnement instationnaire momentané,

(b) lecture d'une valeur de consigne (36) pour un intervalle de temps critique (39), concernant un comportement de fonctionnement optimal de l'élément de propulsion lors de la survenance d'un état de fonctionnement instationnaire, à partir d'un champ de caractéristiques de valeurs de consigne (94 ou 134 ou 142), couvert par des points de fonctionnement (28) sélectionnés et dépendant de la vitesse et de la charge du moteur à combustion interne, en fonction du point de fonctionnement actuel,

(c) détermination d'une valeur réelle (68) pour l'intervalle de temps critique (39),

(d) comparaison (étage comparateur 73) entre la valeur de consigne (36) lue et la valeur réelle (68),

(e) calcul (étage calculateur 99) d'une nouvelle valeur de correction ($K_{neu}$) pour la grandeur de fonctionnement, dans le sens d'une diminution de l'écart entre la valeur de consigne et la valeur réelle, en prenant en considération la valeur de correction (26) stockée et lue et le résultat de la comparaison valeur de consigne-valeur réelle,

(f) écriture de la nouvelle valeur de correction ($K_{neu}$) dans le champ de caractéristiques de valeurs de correction (30 ou 133 ou 141) en fonction du point de fonctionnement actuel,

(g) utilisation de la nouvelle valeur de correction ($k_{neu}$) calculée lors de la détermination de la grandeur de fonctionnement, lorsqu'un état de fonctionnement instationnaire subséquent est identifié,

caractérisés par les étapes suivantes :

(h1) Détermination de la valeur de correction ($k_{zw}$) à lire, par interpellation de valeurs ($26_{(1)}$); ($26_{(2)}$) lues à partir de points de fonctionnement ($28_{(1)}$ et $28_{(2)}$) voisins sélectionnés du champ de caractéristiques (30 ou 133 ou 141) associé, lorsque le point de fonctionnement (31) actuel ne correspond pas à un point de fonctionnement (28) sélectionné du champ de caractéristiques associé,

(h2) utilisation de la valeur de correction ($k_{zw}$) déterminée selon l'étape de procédé (h1) par interpolation, pour la détermination de la grandeur de fonctionnement de l'état de fonctionnement instationnaire momentané,

(h3) détermination de la valeur de consigne ($t_{soll(zw)}$) à lire, par interpolation de valeurs ($36_{(1)}$; $36_{(2)}$) lues à partir de points de fonctionnement ($28_{(1)}$; $28_{(2)}$) sélectionnes voisins du champ de caractéristiques (94 ou 134 ou 142) associés, lorsque le point de fonctionnement (31) actuel ne correspond pas à un point de fonctionnement (28) sélectionné du champ de caractéristiques associé

(i) calcul de la nouvelle valeur de correction ($k_{neu(zw)}$) selon l'étape de procédé (e), pour le point de fonctionnement (31) actuel, en utilisant la valeur de correction ($k_{zw}$) interpolée,

(j) conversion de la nouvelle valeur de correction ($k_{neu(zw)}$) calculée, en une valeur de correction ($k_{neu(ü)}$) transmise, pour un point

de fonctionnement ($28_{(1)}$ ou $28_{(2)}$) sélectionné voisin du point de fonctionnement (31) actuel, en prenant en considération les coordonnées de position (53 ou 54) du point de fonctionnement (31) actuel et du point de fonctionnement sélectionné voisin,

(k1) écriture de la valeur de correction transmise convertie ($k_{neu(ü)}$), à titre de nouvelle valeur de correction dans le champ de caractéristique de valeurs de correction (30 ou 133 ou 141), à l'emplacement du point de fonctionnement ($28_{(1)}$ ou $28_{(2)}$) sélectionné voisin,

(k2) utilisation de la nouvelle valeur de correction ($k_{neu(ü)}$) transmise inscrite pour la détermination de la grandeur de fonctionnement, lorsqu'est identifié un état de fonctionnement instationnaire subséquent,

(l) subdivision de l'intervalle de temps critique (39) en deux ou plusieurs phases (40 et 41 ou 42 à 44),

(m) utilisation chaque fois d'un champ de caractéristiques de valeurs de consigne propre et d'un champ de caractéristiques de valeurs de correction propre, couvert par des points de fonctionnement sélectionnés et dépendant de la vitesse de rotation et de la charge du moteur à combustion interne, pour chaque phase de l'intervalle de temps critique,

(n) exécution des étapes des étapes de procédés (a1) à (k2) précédentes, en utilisant les champs de caractéristiques associés à chaque phase.

2. Procédé selon la revendication 1, caractérisé en ce que, lors de l'exécution des étapes de procédés (j) et (k1) et (k2), on utilise comme point de fonctionnement sélectionné voisin exclusivement le point de fonctionnement ($28_{(1)}$) sélectionné, situé le plus près du point de fonctionnement (31) actuel

3. Procédé selon l'une des revendications 1 ou 2, caractérisé en ce que, lors de la conversion selon l'étape de procédé (j) la différence (35) entre la valeur de correction ($k_{zw}$) interpolée déterminée à partir de l'étape de procédé (h1) et la nouvelle valeur de correction ($k_{neu(zw)}$) calculée selon l'étape de procédé (i), est ajoutée à l'ancienne valeur de correction ($26_{(1)}$) du point de fonctionnement ($28_{(1)}$) sélectionné voisin, stockée dans le champ de caractéristiques de valeurs de correction (30 ou 133 ou 141)

4. Dispositif pour mettre en oeuvre un procédé selon l'une des revendications 1 à 3, avec un étage de mesure (67 ou 67a ou 67b) pour la détermination de la valeur réelle de l'intervalle de temps selon l'étape de procédé (c), avec un organe de réglage (soupape de régulation de pression 89 ou régulateur 33 ou régulateur 33 ou régulateur 84), pour effectuer la détermination de la grandeur de fonctionnement selon les étapes de procédé (a2), (g), (h2) et (k2), avec un dispositif de mémoire de stockage (90, 91 ou 90a, 91a ou 90b, 91b) contenant une cellule de mémoire de stockage (48) pour les valeurs de correction et des cellules de stockage (49) pour les valeurs de consigne, pour y enregistrer les champs de caractéristiques (30, 94 ou 133, 134 ou 141, 142) utilisés selon l'étape de procédé (n), ainsi qu'un étage d'identification (59 ou 59a ou 59b), mis en circuit sur les entrées du dispositif de mémoire de stockage, pour l'état de fonctionnement instationnaire,
caractérisé en ce que
sont prévues un étage calculateur (66), pour déterminer les valeurs de consigne ($t_{soll(zw)}$) associées aux points de fonctionnement (31) non sélectionnés, selon l'étape de procédé (h3), et un étage calculateur (92), pour déterminer les valeurs de correction ($k_{zw}$) associées aux points de fonctionnement (31) non sélectionnes, selon l'étape de procédé (h1), ainsi qu'un étage comparateur (93) pour opérer une comparaison entre les valeurs réelles ($t_{ist}$) et les valeurs de consigne ($t_{soll(zw)}$) associées aux points de fonctionnement (31) non sélectionnes, selon l'étape de procédé (i), et, en ce que les deux étages calculateurs (96 et 92) sont reliés tant à l'étage identification (59 ou 59a ou 59b) qu'également au dispositif de mémoire de stockage (90, 91 ou 90a, 91a ou 90b, 91b) et l'étage comparateur (93) est relié tant à l'étage de mesure (67 ou 67a ou 67b) qu'également à l'étage calculateur (66) pour les valeurs de consigne ($t_{soll(zw)}$) associées aux points de fonctionnement (31) non sélectionnes, les liaions s'effectuant chaque fois côté entrée, et en ce que l'étage calculateur (92) est relié, côté sortie, pour les valeurs de correction ($k_{zw}$) associées au points de fonctionnement (31) non sélectionnés, au moins indirectement, à l'organe de réglage (soupape de régulation de pression 89 ou régulateur 3 ou régulateur (84) (figure 3), en ce que l'étage de mesure (67, respectivement 67a, respectivement 67b) et le dispositif de mémoire de stockage (90, 91 respectivement 90a, 91a respectivement 90b, 91b) sont reliés aux entrées d'un étage comparateur (73) pour opérer la comparaison entre les valeurs réelles ($t_{ist}$) avec les valeurs de consigne ($t_{soll}$) correspondant aux points de fonctionnement sélectionnés, selon l'étape de procédé (d), et l'étage comparateur (73) et le dispositif de mémoire de stockage (90, 91 ou 90a, 91a ou 90b, 91b) sont reliés à un étage calculateur (99) pour déterminer la nouvelle valeur de correction ($k_{neu}$), selon un état de fonctionnement instationnaire se produisant dans un point de fonctionnement (28) sélectionné, selon l'étape de procédé (e), tandis que la sortie de l'étage calculateur (99) est reliée au dispositif de mémoire de stockage (90, 91 ou 90a, 91a ou 90b, 91b), selon l'étape de procédé (f), en ce que sont prévus un étage calculateur (97) destiné à déterminer les nouvelles valeurs de correction ($k_{neu(zw)}$) associées au points de fonctionnement non sélectionnés (31), selon l'étape de procédé (i), et un étage transmetteur (98) destiné à déterminer les nouvelles valeurs de correction ($k_{neu(ü)}$) transmises associées aux points de fonctionnement sélectionnés (28) voisins, selon l'étape de procédé (j), en ce que l'étage calculateur (97) destiné aux nouvelles valeurs de correction ($k_{neu(zw)}$) associées aux points de fonctionnement (31) non sélectionnes est relié, côté entrée, à l'étage comparateur (93) pour opérer une comparaison entre les valeurs de consigne ($t_{soll(zw)}$) des points de fonctionnement (31) non utilisés, selon l'étape de procédé (1), et est reliée à l'étage calculateur (92) pour les valeurs de correction ($k_{zw}$) associées au points de fonctionnement (31) non sélectionnés, selon l'étape de procédé (h1), ainsi qu'à l'étage calculateur (66) pour les valeurs de consigne ($t_{soll(zw)}$) aux points de fonctionnement (31) non sélectionnes, selon l'étape de procédé (h3), et en ce que l'étage transmetteur (98) est relié, côté entrée, à l'étage d'identification (59, respectivement 59a, respectivement 59b) et à l'étage calculateurs (97) pour les nouvelles valeurs de consigne ($k_{neu(zw)}$) associées aux points de fonctionnement (31) non sélectionnes, ainsi qu'aux sorties du dispositif de mémoire de stockage (90, 91 ou 90a, 91a ou 90b, 91b) et à l'étage calculateur (92), pour la détermination des valeurs de correction ($k_{zw}$) associées aux points de fonctionnement (31) non sélectionnés - alors que, par contre, il est relié, côté sortie, à une entrée du dispositif de mémoire de mémoire de stockage (90, 91 ou 90a, 91a ou 90b, 91b), selon l'étape de procédé (k1) (figure 4),

5. Dispositif selon la revendication 4, caractérisé en ce que, dans un mot mémoire (47) utilisé pour l'occupation du dispositif de mémoire de stockage (90, 91 ou 90a, 91a ou 90b, 91b), pour y placer des champs de caractéristiques utilisés selon l'étape de procédé (n), comportant (n) cellules de mémoire ((1) à (8)), (n-a) cellules de mémoire (48) sont utilisées pour l'écriture d'une valeur de correction (K) et a cellules de mémoire (49) pour l'écriture d'une valeur de consigne ($t_{soll}$), et une valeur de correction (K) et une valeur de consigne ($t_{soll}$) d'un mot de mémoire (47) étant associées à un seul et même point de fonctionnement (28) sélectionné,

6. Dispositif selon la revendication 5, caractérisé en ce que n = 8 et a = 2

7. Dispositif selon l'une des revendications 4 à 6, caractérisé en ce que le nombre p de point de fonctionnement (28) sélectionné dans les champs de caractéristiques utilisés selon l'étapes de procédé (n) est chaque fois inférieur à 20,

8. Dispositif selon la revendication 7, caractérisé en ce que p = 9,

9. Dispositif selon l'une des revendications 4 à 8, caractérisé en ce que l'on utilise comme élément de propulsion une boite de vitesse à plusieurs vitesses (21), comme intervalle de temps, le temps de commutation ($\Delta t$) existant entre le début (69) et la fin (70) d'un changement de vitesse et comme grandeur de fonctionnement une pression de commande (soupape de régulation de pression 89), et la pression de commande influençant, de manière connue en soi, la pression de commutation pour solliciter des organes de réglages de manoeuvre destinés à l'actionnement d'éléments à friction (embrayages 111, 112 et frein 52, 113, 114) d'un dispositif de commutation (20) automatique de la boite à changement de vitesse (21)

10. Dispositif selon la revendication 9, caractérisé en ce que le temps de commutation ($\Delta t$) est terminé par appréhension de la modification du rapport de transmission ($n_1/n_2$)

11. Dispositif selon la revendication 9, caractérisé en ce que le temps partiel de commutation ($\Delta t2$) afférent est déterminé, en au moins une phase directement, ou en au moins une autre phase (42), par appréhension de la modification du rapport de transmission ($n_2/n_1$)

12. Dispositif selon l'une des revendications 4 à 10, caractérisé en ce qu' est effectuée une subdivision en un total de trois phases (42 à 44) et le temps partiel de commutation ($\Delta t_1$, respectivement $\Delta t_2$, respectivement $\Delta t_3$) pour chaque phase étant déterminée par appréhension de la modification du rapport de transmission ($n_1/n_2$)

13. Dispositif selon l'une des revendications 4 à 12, caractérisé en ce que la vitesse de rotation d'un organe de transmission (51), relié indirectement à l'arbre d'entrée de boite de vitesse (50), est mesurée pour effectuer pour déterminer la vitesse de rotation d'entrée de boite de vitesse ($n_1$).

14. Dispositif selon la revendication 13, caractérisé en ce que l'organe de transmission (51) est lié à un frein d'une vitesse (52).

15. Dispositif selon l'une des revendications 4 à 8, caractérisé en ce que l'on utilise comme élément de propulsion à moteur à combustion interne (29), avec un catalyseur d'échappement (72) et une sonde λ (sonde de réglage 37) reliée à un régulateur (33), pour optimiser le rapport air-carburant, ainsi qu'avec une sonde λ (sonde de contrôle 38), placée en aval du catalyseur d'échappement (72) et l'étage de mesure (67a) mesurant l'intervalle de temps (39), selon l'étape de procédé (c), pendant duquel la sonde de contrôle (38) à indiqué un rapport air-carburant incorrect, et en ce que tant le dispositif de mémoire (90a, 91a) qu'également l'étage calculateur (92) sont reliés chaque fois côté sortie, au moins indirectement, au régulateur (33), pour effectuer la détermination des valeurs de correction ($26_{zw}$) associées aux points de fonctionnement (31) non sélectionnés, selon l'étape de procédé (h1).

16. Dispositif selon la revendication 15, caractérisé en ce que, l'étage d'identification (59a) réagit à la déviation (bs) d'une chicane de mesure (23) disposée dans le système de conduite d'aspiration (80) du moteur à combustion (29), lorsque la vitesse de rotation ($n_1$) du moteur à combustion interne (29) est constante.

17. Dispositif selon l'une des revendications 4 à 8, caractérisé en ce que l'on utilise comme élément de propulsion à moteur à combustion interne (29), équipé d'un dispositif de réglage (84) influençant la combustion, pour éviter une combustion accompagnée de cognement, dispositif dans lequel est opérée une comparaison entre un signal de référence ($n_1$), consti-

tuant la valeur de paramètre d'une combustion optimale, avec un signal de sortie ($x_s$) dépendant de la combustion, par exemple des conditions de pression et/ou de température régnant dans les chambres de combustion, et, dans le cas où survient un écart, en particulier dans le sens d'une pression anormalement élevée et/ou d'une température anormalement élevée dans les chambres de combustion, du signal de sortie ($x_s$) dépendant de la combustion, une influence est exercée sur une grandeur de commande, déterminant la pression dans les chambres de combustion, et en ce que l'étage de mesure (67b) mesure l'intervalle de temps (39), selon l'étape de procédé (c), pendant lequel se produisent des écarts du signal de sortie ($x_s$) dépendant de la combustion et tant le dispositif de mémoire (90b/91b) qu'également l'étage calculateur (92) étant reliés, au moins indirectement, aux dispositifs régulations (84), chaque fois côté sortie, pour déterminer les valeurs de correction ($26_{zw}$) associées aux points de fonctionnement (31) non sélectionnés, selon l'étape de procédé (h1), pour éviter une combustion accompagnée de cognement.

18. dispositif selon la revendication 17,
caractérisé en ce que
l'étage d'identification (59b) réagit à l'apparition d'écarts, orientés dans le sens d'une pression anormalement élevée et/ou d'une température anormalement élevée, du signal de sortie ($x_s$) dépendant de la combustion

19. Dispositif selon la revendication 17 ou 18,
caractérisé en ce que
la pression d'aspiration ou de suralimentation du moteur à combustion interne (29) est utilisée comme grandeur de commande déterminant la pression dans les chambres de combustion.

Fig.1

# Fig.2

# Fig.3

Fig.4

131

93

von 67

25

124

97

122

$$K_{neu(ZW)} = \frac{t_{ist}}{t_{soll}} \cdot K_{ZW \atop (ZW)}$$

25

27

122

von 92

101

102

von 90a

98

62

von 59

25

63

32

32

zu 90

von 66

122

zu 89(96)

Fig.5

Fig.6

Fig.7

Fig.8

# Fig.9

# Fig.10

*Fig.11*

*Fig.12*

*Fig.13*

# Fig.14

# Fig.15

Fig.16

EP 0 352 782 B1

EP 0 352 782 B1

Fig.17

34

Fig.18

EP 0 352 782 B1

Fig.19

Fig.20